# EUROPÄISCHE PATENTSCHRIFT

(11) **EP 4 046 877 B1**
(45) Veröffentlichungstag und Bekanntmachung des Hinweises auf die Patenterteilung: **26.03.2025**
(21) Anmeldenummer: 22157241.5
(22) Anmeldetag: 17.02.2022
(51) Int. Cl.: B60R 16/03, H01B 13/02

(54) **VERBINDERSYSTEM, KRAFTFAHRZEUG UND VERFAHREN ZUM BETRIEB SOLCH EINES VERBINDERSYSTEMS**
CONNECTOR SYSTEM, MOTOR VEHICLE AND METHOD FOR OPERATING SUCH A CONNECTOR SYSTEM
SYSTÈME DE CONNECTEUR, VÉHICULE AUTOMOBILE ET PROCÉDÉ DE FONCTIONNEMENT D'UN TEL SYSTÈME DE CONNECTEUR

(30) Priorität: 17.02.2021 DE 102021103765
(43) Veröffentlichungstag der Anmeldung: 24.08.2022
(73) Patentinhaber: Yazaki Systems Technologies GmbH, 93059 Regensburg (DE)
(72) Erfinder: Fradczyk, Rafael, 93105 Tegernheim (DE); Chau, Qui, 93053 Regensburg (DE)
(74) Vertreter: Patentanwaltskanzlei WILHELM & BECK

(56) Entgegenhaltungen:
- EP-A2- 2 824 003
- DE-U1- 202009 004 988
- JP-A- 2013 191 335
- US-A- 5 675 322
- US-B2- 6 833 713

## Beschreibung

Die Erfindung betrifft ein Verbindersystem gemäß Patentanspruch 1, ein Kraftfahrzeug gemäß Patentanspruch 7 und ein Verfahren gemäß Patentanspruch 9.

Es sind Kabelbäume zum Verbinden von elektrischen Komponenten in einem Kraftfahrzeug bekannt. Die Kabelbäume weisen beidseitig eine Kontakteinrichtung auf, wobei die Kontakteinrichtung jeweils eine vordefinierte Sollbelegung aufweist. Tritt beim Stecken der jeweiligen Kontakteinrichtung ein Fehler auf, so wird dieser erst bei der Überprüfung der Kabelbäume festgestellt. Der Fehler kann nicht oder nur aufwendig behoben werden.

Aus US 5,675,322 A ist eine Kodiervorrichtung für einen Kabelbaum bekannt.

EP 2 824 003 A2 zeigt ein Verfahren zum Ausrüsten eines Fahrzeugs mit einem Steuergerät.

Des Weiteren zeigt das gattungsgemäße US 6,833,713 B2 einen Kabelbaum, bei dem zur Vermeidung von Lichtbögen an einem beschädigten Kabel des Kabelbaums das beschädigte Kabel abgeschalten wird.

Es ist Aufgabe der Erfindung, ein verbessertes Verbindersystem, insbesondere einen verbesserten Kabelbaum, ein verbessertes Kraftfahrzeug und ein verbessertes Verfahren zum Betrieb solch eines Verbindersystems bereitzustellen.

Diese Aufgabe wird mittels der Merkmale der Hauptansprüche gelöst. Vorteilhafte Ausführungsformen sind in den abhängigen Ansprüchen angegeben.

Erfindungsgemäß wurde erkannt, dass ein verbessertes Verbindersystem dadurch bereitgestellt werden kann, dass das Verbindersystem, das insbesondere als Kabelbaumsystem ausgebildet ist, eine erste Schalteinrichtung, einen Kabelstrang und eine erste Kontakteinrichtung aufweist, wobei der Kabelstrang eine Anordnung aus einer Vielzahl von elektrischen Kabeln aufweist. Die erste Schalteinrichtung weist eine erste Seite und eine zweite Seite auf, wobei eine der beiden Seiten mit der ersten Kontakteinrichtung elektrisch verbunden ist. Der Kabelstrang ist mit der ersten Kontakteinrichtung direkt oder indirekt elektrisch verbunden. Die erste Schalteinrichtung ist in Abhängigkeit einer ersten Sollbelegung der ersten Kontakteinrichtung in eine Korrekturschaltstellung geschalten. Das Verbindersystem weist eine zweite Schalteinrichtung und eine zweite Kontakteinrichtung auf, wobei die zweite Schalteinrichtung eine dritte Seite und eine vierte Seite aufweist. Die vierte Seite ist mit der zweiten Kontakteinrichtung und die dritte Seite ist mit dem Kabelstrang elektrisch verbunden. Die zweite Schalteinrichtung verbindet in Abhängigkeit einer zweiten Sollbelegung der zweiten Kontakteinrichtung den Kabelstrang mit der zweiten Kontakteinrichtung elektrisch. Der Kabelstrang weist ein Ersatzkabel auf, wobei das Ersatzkabel die erste Kontakteinrichtung mit der zweiten Schalteinrichtung elektrisch verbindet. Die erste und zweite Schalteinrichtung sind derart geschalten, dass das Ersatzkabel das erste elektrische Kabel elektrisch überbrückt oder parallel zu dem ersten elektrischen Kabel geschalten wird.

Diese Ausgestaltung hat den Vorteil, dass auch in verlegtem Zustand des Verbindersystems, beispielsweise wenn das erste elektrische Kabel beschädigt ist, kein zusätzliches Kabel gezogen/verlegt werden muss, sondern dieses mit dem Ersatzkabel innerhalb des Verbindersystems durch entsprechende Schaltung der beiden Schalteinrichtungen überbrückt werden kann.

Die Ausgestaltung hat ferner den Vorteil, dass die Kabel des Kabelstrangs zwischen der ersten Kontakteinrichtung und der zweiten Kontakteinrichtung in Abhängigkeit ihrer räumlichen Lage mit der dritten Seite und mit der zweiten Seite verbunden werden können und durch die erste Schalteinrichtung und die zweite Schalteinrichtung jeweils die Sollbelegung der zugeordneten Kontakteinrichtung hergestellt wird. Dadurch werden mechanische Spannungen im Kabelstrang reduziert und dadurch eine mechanische Beschädigung elektrischer Leiter des Kabelstrangs verhindert.

Die Ausgestaltung hat den weiteren Vorteil, dass eine Nullfehlerkabelquote für die Herstellung des Verbindersystems sichergestellt werden kann, da Fehler bei der Verkabelung des Kabelstrangs durch die Korrekturschaltstellung der ersten Schalteinrichtung korrigiert werden können. Ferner kann der Kabelstrang, insbesondere wenn das Verbindersystem als Kabelbaumsystem ausgebildet ist, auch als Stufenkabelbaum ausgebildet sein, sodass wenigstens eines der elektrischen Kabel als Totkabel/Ersatzkabel ausgebildet ist, das bei einer von zahlreichen Ausstattungsvarianten des Kraftfahrzeugs eine Funktion aufweist. Das funktionslose Totkabel/Ersatzkabel kann durch die erste Schalteinrichtung auch in einer bestimmten Ausstattungsvariante des Kraftfahrzeugs funktionsbehaftet geschalten werden, sodass das Verbindersystem nicht in zahlreichen Varianten hergestellt werden muss und eine Bauteilvielzahl im Kraftfahrzeug reduziert werden kann.

In einer weiteren Ausführungsform ist die erste Schalteinrichtung zwischen dem Kabelstrang und der ersten Kontakteinrichtung angeordnet, wobei die erste Seite elektrisch mit der ersten Kontakteinrichtung und die zweite Seite mit dem Kabelstrang verbunden ist. Die erste Schalteinrichtung in der ersten Korrekturschaltstellung verbindet den Kabelstrang elektrisch mit der ersten Kontakteinrichtung und die erste Kontakteinrichtung ist mit der ersten Sollbelegung belegt. Dabei kann die zweite Seite mit einer ersten Istbelegung von elektrischen Kabeln des Kabelstrangs belegt sein. Diese Ausgestaltung hat den Vorteil, dass das Verbindersystem als kompaktes Kabelbaumsystem bereitgestellt wird, das zusammen mit der bereits programmierten und geschalteten ersten Schalteinrichtung ausgeliefert werden kann. Dadurch kann das Verbindersystem direkt im Kraftahrzeug montiert werden, ohne dass weitere Testroutinen und Einstellungsroutinen im Werk des Fahrzeugherstellers notwendig sind. Durch die Korrekturschaltstellung der ersten Schalteinrichtung wird die erste Istbelegung der zweiten Seite auf die erste Sollbelegung der ersten Kontakteinrichtung umgeschaltet. Dadurch kann die zweite Seite unabhängig und besonders schnell montiert werden.

In einer weiteren Ausführungsform ist die erste Kontakteinrichtung zwischen der ersten Schalteinrichtung und dem Kabelstrang angeordnet. Die erste Seite ist mit einer elektrischen Komponente, beispielsweise einem Steuergerät, elektrisch verbindbar und die zweite Seite ist mit der ersten Kontakteinrichtung elektrisch verbunden. Jeweils ein Kontaktelement der ersten Kontakteinrichtung ist mit jeweils einem elektrischen Kabel des Kabelstrangs elektrisch und mechanisch verbunden, wobei die Kontaktelemente der ersten Kontakteinrichtung mit der ersten Istbelegung in einem ersten Kontaktgehäuse angeordnet sind. Die Korrekturschaltstellung ist in Abhängigkeit der ersten Istbelegung und der ersten Sollbelegung bestimmt. Diese Ausgestaltung hat den Vorteil, dass durch die direkte Verbindung des Kabelstrangs mit der ersten Kontakteinrichtung der Kabelstrang direkt anschließend an die erste Kontakteinrichtung in einem engen Radius geführt werden kann, ohne dass hierbei die erste Schalteinrichtung mechanisch beschädigt wird. Ferner kann die erste Kontakteinrichtung besonders schnell, vorzugsweise automatisiert, und unabhängig von der ersten Sollbelegung bestückt werden.

In einer weiteren Ausführungsform weist die erste Schalteinrichtung wenigstens eine erste Schalteinheit auf, wobei die erste Schalteinheit zumindest zwischen einer ersten Schaltstellung und einer zweiten Schaltstellung schaltbar ist. Die erste Schalteinheit verbindet elektrisch in der ersten Schaltstellung einen ersten Anschluss der ersten Seite mit einem dritten Anschluss der zweiten Seite. In der zweiten Schaltstellung verbindet die erste Schalteinheit den ersten Anschluss mit einem vierten Anschluss der zweiten Seite elektrisch. Die erste Schalteinheit ist in die erste Schaltstellung oder in die zweite Schaltstellung in Abhängigkeit der Korrekturschaltstellung geschaltet. Diese Ausgestaltung hat den Vorteil, dass die erste Sollbelegung mittels einer besonders einfach ausgebildeten Schalteinheit der ersten Kontakteinrichtung hergestellt werden kann.

In einer weiteren Ausführungsform kann die erste Schalteinrichtung wenigstens eine zweite Schalteinheit aufweisen, wobei die zweite Schalteinheit zumindest zwischen einer dritten Schaltstellung und einer vierten Schaltstellung schaltbar ist, wobei die zweite Schalteinheit in der dritten Schaltstellung einen zweiten Anschluss der ersten Seite mit dem dritten Anschluss der zweiten Seite elektrisch verbindet. Die zweite Schalteinheit verbindet elektrisch in der vierten Schaltstellung den zweiten Anschluss mit dem vierten Anschluss der zweiten Seite. In Abhängigkeit der Korrekturschaltstellung ist die zweite Schalteinheit in die dritte Schaltstellung oder in die vierte Schaltstellung geschalten. Diese Ausgestaltung hat den Vorteil, dass auch eine Verpolung der Kabel im Strang durch die erste Schalteinrichtung ausgeglichen werden kann, sodass die erste Kontakteinrichtung entsprechend der ersten Sollbelegung mit den elektrischen Kabeln des Kabelstrangs elektrisch verbunden ist.

In einer weiteren Ausführungsform weist die erste Schalteinheit und/oder die zweite Schalteinheit eine Anordnung aus wenigstens zwei parallel angeordneten Schaltelementen auf, wobei das Schaltelement, ein Halbleiterbauelement, insbesondere einen Transistor, insbesondere ein Leistungstransistor, beispielsweise einen MOSFET und/oder eine Diode, insbesondere eine Sperrdiode, aufweist. Diese Ausgestaltung hat den Vorteil, dass die Schalteinheit besonders kostengünstig aus Standardbauteilen hergestellt werden kann und kompakt in dem Verbindersystem integriert werden kann.

Zusätzlich oder alternativ ist das Schaltelement als elektronisches Halbleiter-Bauelement ausgebildet. Zusätzlich oder alternativ kann die erste Schalteinrichtung wenigstens einen integrierten Schaltkreis, insbesondere ein Field Programmable Gate Array (FPGA), Programmable Logic Array (PLA), Programmable Logic Device (PLD), Generic Array Logic (GAL) und/oder Complex Programmable Logic Device (CPLD), aufweisen. Diese Ausgestaltung eignet sich für einen Kabelstrang mit einer Vielzahl von elektrischen Kabeln, da bei diesem durch die erste Schalteinrichtung die Sollbelegung der ersten Kontakteinrichtung auch bei einer völlig falschen erster Istbelegung hergestellt werden kann.

Dadurch ist der Aufwand für eine Nachbearbeitung besonders gering. Auch kann durch die Parallelschaltung eine thermische Überhitzung des ersten elektrischen Kabels, beispielsweise bei einem geringen Schaden und gleichzeitig hohen zu übertragenden Strömen, vermieden werden.

Ein Kraftfahrzeug weist ein Verbindersystem und ein Fahrzeugsteuergerät auf, wobei das Verbindersystem wie oben beschrieben ausgebildet ist. Das Fahrzeugsteuergerät ist mit der ersten Schalteinrichtung gekoppelt und ausgebildet, die erste Schalteinrichtung zu steuern. Die Kopplung kann beispielsweise mittels eines CAN-Busses erzielt werden. Durch die Kopplung des Fahrzeugsteuergeräts mit der Schalteinrichtung kann die erste Schalteinrichtung genutzt werden, um beispielsweise eine an dem Verbindersystem angeschlossene elektrische Komponente ein- und auszuschalten. Dadurch kann auf zusätzliche Steuerkomponenten, insbesondere Relais oder Halbleiterschaltelemente, beispielsweise MOSFETs, zum Ein- und Ausschalten der elektrischen Komponente verzichtet werden. Dadurch ist das Kraftfahrzeug besonders einfach und kostengünstig ausgebildet.

In einer weiteren Ausführungsform ist das Fahrzeugsteuergerät mit einem Sensor des Verbindersystems verbunden und ausgebildet, eine Information des Sensors über einen Betriebsparameter des Verbindersystems zu erfassen. Das Fahrzeugsteuergerät ist weiter ausgebildet, den Betriebsparameter bei der Steuerung der ersten Schalteinrichtung zu berücksichtigen.

In einem Verfahren werden elektrische Kabel eines Kabelstrangs eines Verbindersystems verlegt, wobei der Kabelstrang mit einer Kontakteinrichtung des Verbindersystems elektrisch verbunden wird, wobei eine Korrekturschaltstellung einer ersten Schalteinrichtung des Verbindersystems in Abhängigkeit einer ersten Sollbelegung der ersten Kontakteinrichtung ermittelt wird, wobei die erste Schalteinrichtung in Abhängigkeit der ermittelten Korrekturschaltstellung geschalten wird.

In einer weiteren Ausführungsform wird eine Helligkeit beispielsweise einer Umgebung gemessen, wobei die gemessene Helligkeit mit einer vordefinierten Helligkeit verglichen wird, wobei bei Unterschreiten der vordefinierten Helligkeit durch die ermittelte Helligkeit die Schalteinrichtung in die Korrekturschaltstellung geschalten wird, wobei bei Überschreiten der vordefinierten Helligkeit durch die ermittelte Helligkeit die Schalteinrichtung geöffnet wird und eine Stromübertragung durch die Schalteinrichtung unterbrochen ist. Dadurch kann auf weitere Schalter verzichtet werden und beispielsweise Scheinwerfer mit dem Verbindersystem, insbesondere mittels des Kabelbaumsystems, geschalten werden. Auch durch die Integration kann beispielsweise auf ein Lichtmodul verzichtet werden und/oder eine Reaktionszeit bis zur Aktivierung bzw. Deaktiverung der Stromübertragung besonders kurz gehalten werden.

In einer weiteren Ausführungsform wird eine Durchgangsprüfung für jedes elektrische Kabel des Kabelstrangs durchgeführt, wobei auf Grundlage eines Ergebnisses der Durchgangsprüfung für alle elektrischen Kabel die Istbelegung der Kontakteinrichtung ermittelt wird. Die erste Istbelegung wird bei Ermittlung der Korrekturschaltstellung berücksichtigt. Dadurch kann auch automatisiert die Korrekturschaltstellung auf Grundlage der Istbelegung und der ersten Sollbelegung ermittelt werden.

In einer weiteren Ausführungsform wird ein elektrischer Widerstand wenigstens eines elektrischen Kabels, vorzugsweise aller elektrischen Kabel des Kabelstrangs ermittelt, wobei der elektrische Widerstand des elektrischen Kabels mit einem vordefinierten Widerstand verglichen wird, wobei bei Überschreiten des vordefinierten Widerstands durch den ermittelten Widerstand die Korrekturschaltstellung derart angepasst wird, dass das elektrische Kabel, dessen elektrischer Widerstand den vordefinierten Widerstand überschreitet, durch ein Ersatzkabel überbrückt wird. Diese Ausgestaltung hat den Vorteil, dass ein Kabelbrand durch Deaktivierung und Überbrückung des gefährdeten Kabels vermieden werden kann.

In einer weiteren Ausführungsform wird ein elektrischer Widerstand jedes elektrischen Kabels des Kabelstrangs ermittelt, wobei das elektrische Kabel mit dem größten elektrischen Widerstand bestimmt wird, wobei die Korrekturschaltstellung derart bestimmt wird, dass ein Ersatzkabel parallel zu dem Kabel mit dem größten elektrischen Widerstand geschalten wird. Diese Ausgestaltung hat den Vorteil, dass eine thermische Belastung des elektrischen Kabels durch Parallelschaltung des Ersatzkabels reduziert werden kann und ein Kabelbrand vermieden werden kann.

Nachfolgend wird die Erfindung anhand von Figuren näher erläutert. Dabei zeigen:
- Figur 1: eine schematische Darstellung eines Verbindersystems gemäß einer ersten Ausführungsform für ein Kraftfahrzeug;
- Figur 2: eine schematische Darstellung einer ersten Schalteinrichtung des in Figur 1 gezeigten Verbindersystems;
- Figur 3: ein Ablaufdiagramm eines Verfahrens zur Herstellung des in den Figuren 1 und 2 gezeigten Verbindersystems;
- Figur 4: eine schematische Darstellung eines Testsystems mit dem Verbindersystem;
- Figur 5: eine schematische Darstellung eines Verbindersystems gemäß einer zweiten Ausführungsform;
- Figur 6: eine schematische Darstellung eines Verbindersystems gemäß einer dritten Ausführungsform;
- Figur 7: eine schematische Darstellung des in Figur 6 gezeigten Verbindersystems;
- Figur 8: eine schematische Darstellung eines Verbindersystems gemäß einer vierten Ausführungsform;
- Figur 9: einen Ausschnitt einer schematischen Darstellung des in Figur 8 gezeigten Verbindersystems; und
- Figur 10: eine schematische Darstellung des Kraftfahrzeugs.

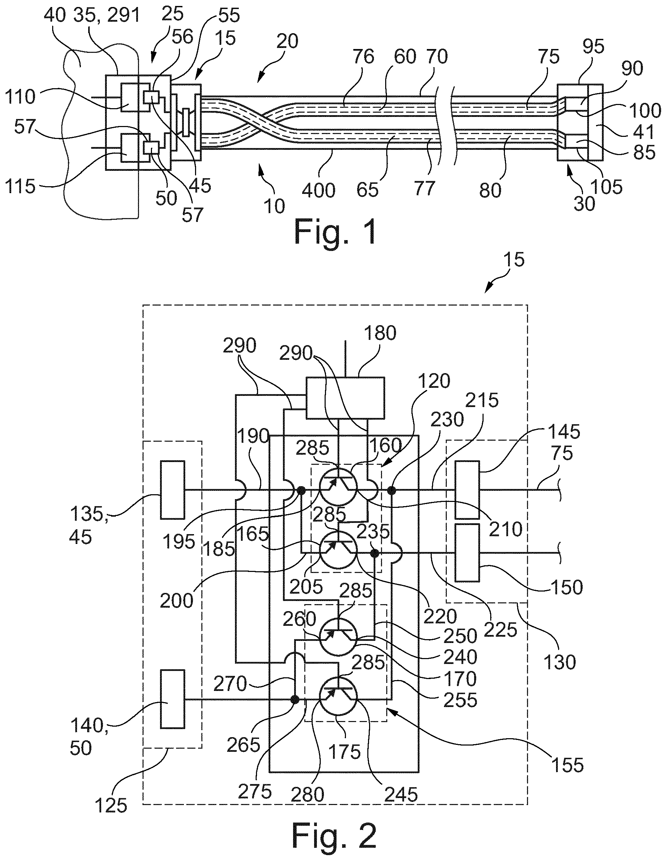

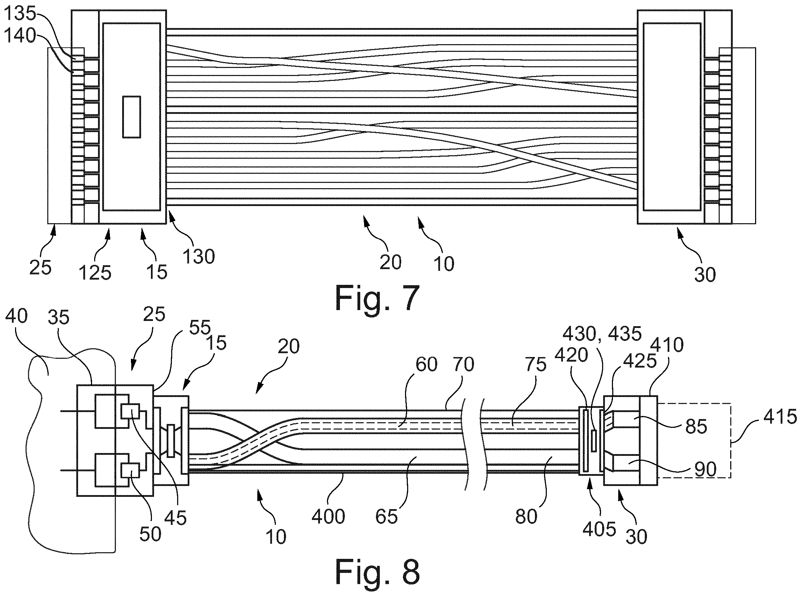

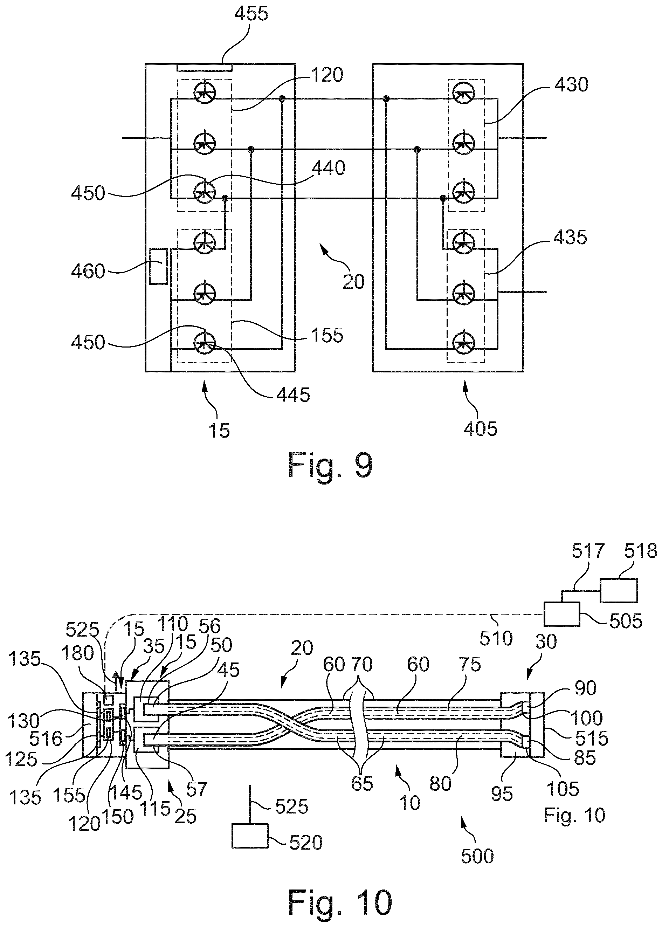

Dabei sind in den Figuren 1 bis 7 die erste bis dritte beispielhafte Ausführungsform eines Verbindungssystems erläutert. Diese Ausführungsformen dienen zur Erläuterung des allgemeinen Aufbaus des Verbindungssystems 10, wobei in den Figuren 8 und 9 auf das erfindungsgemäße Verbindungssystem 10 eingegangen wird.

Figur 1 zeigt eine schematische Darstellung eines Verbindersystems 10 gemäß einer ersten Ausführungsform für ein Kraftfahrzeug 500.

Das Verbindersystem 10 ist insbesondere als Kabelbaumsystem ausgebildet. Das Verbindersystem 10 weist eine erste programmierbare Schalteinrichtung 15, einen Kabelstrang 20, eine erste Kontakteinrichtung 25 und beispielhaft eine zweite Kontakteinrichtung 30 auf. Die erste Kontakteinrichtung 25 kann eine erste Gegenkontakteinrichtung 35 elektrisch direkt kontaktieren. Beispielhaft kann die erste Gegenkontakteinrichtung 35 beispielsweise auf einer Leiterplatte eines Steuergeräts 40 angeordnet sein. Die erste Kontakteinrichtung 25 und die erste Gegenkontakteinrichtung 35 sind korrespondierend zueinander ausgebildet.

In Figur 1 wird eine beispielhafte, besonders einfache Ausführungsform des Verbindersystems 10 erläutert. In dieser Ausführungsform weist beispielhaft die erste Kontakteinrichtung 25 ein erstes Kontaktelement 45, ein zweites Kontaktelement 50 und ein erstes Kontaktgehäuse 55 auf. Das erste Kontaktgehäuse 55 weist eine erste Kontaktaufnahme 56 und beispielhaft eine zweite Kontaktaufnahme 57 auf. Eine erste Anzahl der Kontaktaufnahmen 56, 57 ist im Wesentlichen nur durch Bauraumgrenzen limitiert und kann größer als eine zweite Anzahl der ersten und zweiten Kontaktelemente 45, 50 sein.

In der Ausführungsform sind die erste Kontaktaufnahme 56 und die zweite Kontaktaufnahme 57 identisch zueinander ausgebildet. Ebenso sind beispielhaft das erste Kontaktelement 45 und das zweite Kontaktelement 50 identisch zueinander ausgebildet, sodass das erste Kontaktelement 45 sowohl in der ersten Kontaktaufnahme 56 als auch in der zweiten Kontaktaufnahme 57 befestigt werden kann. Ebenso kann das zweite Kontaktelement 50 in der ersten Kontaktaufnahme 56 oder in der zweiten Kontaktaufnahme 57 angeordnet sein.

Das erste Kontaktgehäuse 55 weist eine erste Sollbelegung durch das erste und zweite Kontaktelement 45, 50 auf. Beispielhaft ist die erste Sollbelegung derart, dass das erste Kontaktelement 45 in der ersten Kontaktaufnahme 56 und das zweite Kontaktelement 50 in der zweiten Kontaktaufnahme 57 angeordnet ist.

Der Kabelstrang 20 weist beispielhaft ein erstes elektrisches Kabel 60 und ein zweites elektrisches Kabel 65 auf. Eine dritte Anzahl der elektrischen Kabel 60, 65 ist dabei frei wählbar und kann deutlich größer als in Figur 1 gezeigt sein.

Das erste elektrische Kabel 60 und das zweite elektrische Kabel 65 sind durch eine Ummantelung 70 ummantelt. Die Ummantelung 70 verbindet das erste elektrische Kabel 60 mit dem zweiten elektrischen Kabel 65 mechanisch. Die Ummantelung 70 kann beispielsweise als Wicklung ausgebildet sein. Auch kann die Ummantelung 70 einen Schaumwerkstoff aufweisen, der zumindest teilweise das erste elektrische Kabel 60 und das zweite elektrische Kabel 65 aufnimmt. Von besonderem Vorteil ist, wenn das erste elektrische Kabel 60 und das zweite elektrische Kabel 65 in der Ummantelung 70 eingebettet sind.

Das erste elektrische Kabel 60 weist einen ersten elektrischen Leiter 75 und eine erste Leiterisolierung 76 und das zweite elektrische Kabel 65 weist einen zweiten elektrischen Leiter 80 und eine zweite Leiterisolierung 77 auf. Die Leiterisolierung 76, 77 ummantelt den jeweils zugeordneten elektrischen Leiter 75, 80 umfangsseitig und isoliert jeweils den elektrischen Leiter 75, 80 gegenüber dem anderen elektrischen Leiter 75, 80. Der erste und zweite elektrische Leiter 75, 80 können ein Datensignal und/oder eine elektrische Leistung übertragen.

Die zweite Kontakteinrichtung 30 weist ein drittes Kontaktelement 85, ein viertes Kontaktelement 90 und ein zweites Kontaktgehäuse 95 auf. Das zweite Kontaktgehäuse 95 weist eine dritte Kontaktaufnahme 100 und wenigstens eine vierte Kontaktaufnahme 105 auf. Eine vierte Anzahl der dritten und vierten Kontaktaufnahmen 100, 105 des zweiten Kontaktgehäuses 95 ist im Wesentlichen nur durch Baugraumgrenzen limitiert und kann größer als eine fünfte Anzahl der im zweiten Kontaktgehäuse 95 angeordneten Kontaktelemente 45, 50 sein.

In der Ausführungsform sind die dritte Kontaktaufnahme 100 und die vierte Kontaktaufnahme 105 identisch zueinander ausgebildet. Ebenso sind beispielhaft das dritte Kontaktelement 85 und das vierte Kontaktelement 90 identisch zueinander ausgebildet, sodass das dritte Kontaktelement 85 sowohl in der dritten Kontaktaufnahme 100 als auch in der vierten Kontaktaufnahme 105 befestigt werden kann. Ebenso kann das vierte Kontaktelement 90 in der dritten Kontaktaufnahme 100 oder in der vierten Kontaktaufnahme 105 angeordnet sein.

Das zweite Kontaktgehäuse 95 weist eine zweite Sollbelegung durch das dritte und vierte Kontaktelement 85, 90 auf. Beispielhaft ist die zweite Sollbelegung derart, dass das dritte Kontaktelement 85 in der dritten Kontaktaufnahme 100 und das vierte Kontaktelement 90 in der vierten Kontaktaufnahme 105 angeordnet ist.

Die erste und/oder zweite Kontaktaufnahme 56, 57 kann unterschiedlich oder identisch zu der dritten und/oder vierten Kontaktaufnahme 100, 105 ausgebildet sein. Ebenso können das erste und/oder das zweite Kontaktelement 45, 50 unterschiedlich oder identisch zu dem dritten und/oder vierten Kontaktelement 85, 90 sein. Von besonderem Vorteil ist, wenn das erste und/oder zweite Kontaktelement 45, 50 als Steckkontakt und das dritte und/oder vierte Kontaktelement 85, 90 als Buchsenkontakt ausgebildet sind.

Der erste elektrische Leiter 75 ist an einem Ende am gegenüberliegenden Ende zum ersten Kontaktelement 45 mit dem dritten Kontaktelement 85 elektrisch und mechanisch verbunden. Dabei kann beispielsweise das erste und dritte Kontaktelement 45, 85 mit dem ersten elektrischen Leiter 75 jeweils kraft- und/oder formschlüssig, beispielsweise vercrimpt und/oder verpresst und/oder verlötet sein. Der zweite elektrische Leiter 80 ist am gegenüberliegenden Ende zum zweiten Kontaktelement 50 mit dem vierten Kontaktelement 90 elektrisch und mechanisch verbunden.

Auf einer der ersten Kontakteinrichtung 25 zugewandten Seite sind die elektrischen Kabel 60, 65 mit der ersten Schalteinrichtung 15 gemäß einer ersten Istbelegung verbunden.

Durch die Möglichkeit, das dritte Kontaktelement 85 sowohl in die dritte Kontaktaufnahme 100 als auch in die vierte Kontaktaufnahme 105 einzustecken, weist die zweite Kontakteinrichtung 30 eine zweite Istbelegung auf, die im Idealfall der zweiten Sollbelegung entspricht, aber auch von der zweiten Sollbelegung abweichen kann.

Im Folgenden weicht beispielsweise die zweite Istbelegung von der zweiten Sollbelegung ab. Beispielhaft sind das dritte Kontaktelement 85 und das vierte Kontaktelement 90 in der zweiten Istbelegung vertauscht in das zweite Kontaktgehäuse 95 gesteckt. Somit ist das dritte Kontaktelement 85 in der vierten Kontaktaufnahme 105 und das vierte Kontaktelement 90 in der dritten Kontaktaufnahme 100 angeordnet. Diese Anordnung hat beispielsweise zur Folge, dass, symbolisch in Figur 1 dargestellt, sich die elektrischen Kabel 60, 65 des Kabelstrangs 20 überkreuzen.

Die erste Gegenkontakteinrichtung 35 kontaktiert die erste Kontakteinrichtung 25 und weist einen ersten Gegenkontakt 110 und einen zweiten Gegenkontakt 115 auf. Der erste Gegenkontakt 110 kann das erste Kontaktelement 45 bei der ersten Sollbelegung oder das zweite Kontaktelement 50 bei der beispielhaften ersten Istbelegung kontaktieren.

Figur 2 zeigt eine schematische Darstellung der ersten Schalteinrichtung 15 des in Figur 1 gezeigten Verbindersystems 10.

Die erste Schalteinrichtung 15 weist eine erste Schalteinheit 120 (mittels eines strichlierten Rechtecks markiert), eine zweite Schalteinheit 155, eine erste Seite 125 und eine zweite Seite 130 auf. Die erste Schalteinheit 120 und die zweite Schalteinheit 155 sind elektrisch zwischen der ersten Seite 125 und der zweiten Seite 130 angeordnet. Die erste Seite 125 ist mit der ersten Kontakteinrichtung 25 und die zweite Seite 130 ist mit dem Kabelstrang 20 verbunden. Eine sechste Anzahl der ersten und zweiten Schalteinheiten 120, 155 entspricht zumindest der zweiten Anzahl der ersten und zweiten Kontaktelemente 45, 50 der ersten Kontakteinrichtung 25.

Ein erster Anschluss 135 der ersten Seite 125 ist mit dem ersten Kontaktelement 45 und ein zweiter Anschluss 140 der ersten Seite 125 ist mit dem zweiten Kontaktelement 50 elektrisch verbunden. Ein dritter Anschluss 145 der zweiten Seite 130 kann mit dem ersten elektrischen Leiter 75 und ein vierter Anschluss 150 der zweiten Seite 130 kann mit dem zweiten elektrischen Leiter 80 elektrisch verbunden sein. Auch kann eine Kontaktierung der ersten Seite 125 auch umgekehrt sein. Die erste Seite 125 ist somit gemäß der ersten Istbelegung mit den elektrischen 60, 65 kontaktiert.

Die erste Schalteinheit 120 und/oder die zweite Schalteinheit 155 kann beispielsweise einen integrierten Schaltkreis, insbesondere ein Field Programmable Gate Array (FPGA), ein Programmable Logic Array (PLA), ein Programmable Logic Device (PLD), ein Generic Array Logic (GAL) und/oder ein Complex Programmable Logic Device (CPLD), aufweisen. Auch eine andere Ausgestaltung der ersten Schalteinheit 120 wäre denkbar.

Bei der in Figur 2 gezeigten beispielhaften Ausgestaltung der ersten Schalteinrichtung 15 weist die erste Schalteinheit 120 eine erste Anordnung aus zwei parallel angeordneten ersten und zweiten Schaltelementen 160, 165 auf. Die erste Schalteinheit 120 weist zumindest eine siebte Anzahl von ersten und zweiten Schaltelementen 160, 165 auf, die der zweiten Anzahl von ersten und zweiten Kontaktelementen 45, 50 der ersten Kontakteinrichtung 25 entspricht.

Ebenso weist die zweite Schalteinheit 155 eine zweite Anordnung von wenigstens zwei parallel angeordneten dritten und vierten Schaltelementen 170, 175 auf. Die zweite Schalteinheit 155 weist zumindest eine achte Anzahl von dritten und vierten Schaltelementen 170, 175 auf, die der zweiten Anzahl von ersten und zweiten Kontaktelementen 45, 50 der ersten Kontakteinrichtung 25 entspricht. Ferner sind vorzugsweise die siebte Anzahl und die achte Anzahl von ersten bis vierten Schaltelementen 160, 165, 170, 175 identisch.

Ferner weist die erste Schalteinrichtung 15 eine Steuereinrichtung 180 auf. In der Ausführungsform sind die Schaltelemente 160, 165, 170, 175 identisch zueinander ausgebildet. Beispielsweise kann das Schaltelement 160, 165, 170, 175 als elektronisches Halbleiterbauelement, insbesondere als MOSFET, ausgebildet sein. Auch kann das elektronische Halbleiterbauelement andersartig ausgebildet sein.

In der Ausführungsform ist ein erster Drain-Anschluss 185 des ersten Schaltelements 160 über eine erste Verbindung 190 mit dem ersten Anschluss 135 elektrisch verbunden. In der ersten Verbindung 190 ist ein erster Knotenpunkt 195 angeordnet, wobei über eine zweite Verbindung 200 ein zweiter Drain-Anschluss 205 des zweiten Schaltelements 165 mit dem ersten Knotenpunkt 195 elektrisch verbunden ist. Ein erster Source-Anschluss 210 ist mit dem dritten Anschluss 145 mittels einer dritten elektrischen Verbindung 215 elektrisch verbunden. Ein zweiter Source-Anschluss 220 des zweiten Schaltelements 165 ist über eine vierte Verbindung 225 mit dem vierten Anschluss 150 verbunden. In der dritten Verbindung 215 ist ein zweiter Knotenpunkt 230 und in der vierten Verbindung 225 ist ein dritter Knotenpunkt 235 angeordnet.

Durch das erste und zweite Schaltelement 160, 165 weist die erste Schalteinheit 120 wenigstens eine erste Schaltstellung und eine zweite Schaltstellung auf. In der ersten Schaltstellung steuert die Steuereinrichtung 180 das erste Schaltelement 160 über den Gate-Anschluss 285 des ersten Schaltelements 160 derart an, dass der erste Drain-Anschluss 185 elektrisch mit dem ersten Source-Anschluss 210 verbunden ist und das erste Schaltelement 160 auf Durchlass geschalten ist. Dazu kann beispielsweise Spannung an den ersten Gate-Anschluss 285 angelegt werden. Ferner steuert die Steuereinrichtung 180 in der ersten Schaltstellung das zweite Schaltelement 165 derart an, dass das zweite Schaltelement 165 geöffnet ist und der zweite Source-Anschluss 220 von dem zweiten Drain-Anschluss 205 elektrisch getrennt ist. Somit ist in der ersten Schaltstellung der ersten Schalteinheit 120 der erste Anschluss 135 über die erste Verbindung 190 und die dritte Verbindung 215 mit dem dritten Anschluss 145 elektrisch verbunden.

In der zweiten Schaltstellung der ersten Schalteinheit 120 ist das erste Schaltelement 160 und das zweite Schaltelement 165 umgekehrt zur ersten Schaltstellung durch die Steuereinrichtung 180 geschalten, wobei über den Gate-Anschluss 285 die Steuereinrichtung 180 das zweite Schaltelement 165 ansteuert und schließt, sodass der zweite Source-Anschluss 220 mit dem zweiten Drain-Anschluss 205 elektrisch verbunden ist. Das erste Schaltelement 160 ist von der Steuereinrichtung 180 so angesteuert, dass der erste Source-Anschluss 210 elektrisch getrennt von dem ersten Drain-Anschluss 185 ist. In der zweiten Schaltstellung ist der erste Anschluss 135 über die erste Verbindung 190 und über den ersten Knotenpunkt 195 sowie über die zweite Verbindung 200 und über das geschlossene zweite Schaltelement 165 mit der vierten Verbindung 225 und somit mit dem vierten Anschluss 150 verbunden.

Die zweite Schalteinheit 155 ist beispielhaft im Wesentlichen identisch zu der ersten Schalteinheit 120 ausgebildet. Ein dritter Source-Anschluss 240 des dritten Schaltelements 170 ist über eine fünfte Verbindung 250 mit dem zweiten Knotenpunkt 230 verbunden. Ein vierter Source-Anschluss 245 ist über eine sechste Verbindung 255 mit dem zweiten Knotenpunkt 230 elektrisch verbunden. Ein dritter Drain-Anschluss 260 des dritten Schaltelements 170 ist mit einem vierten Knotenpunkt 265 über eine siebte Verbindung 270 elektrisch verbunden. Der vierte Knotenpunkt 265 ist in einer achten elektrischen Verbindung 275 angeordnet, die einen vierten Drain-Anschluss 280 des vierten Schaltelements 175 mit dem zweiten Anschluss 140 elektrisch verbindet. Ein Gate-Anschluss 285 jedes der Schaltelemente 160, 165, 170, 175 ist mit der Steuereinrichtung 180 über jeweils eine neunte Verbindung 290 elektrisch verbunden.

Die zweite Schalteinheit 155 ist im Wesentlichen analog zur der ersten Schalteinheit 120 ausgebildet und schaltbar. Die zweite Schalteinheit 155 weist eine dritte Schaltstellung und eine vierte Schaltstellung auf, wobei in der dritten Schaltstellung die Steuereinrichtung 180 das dritte Schaltelement 170 über den Gate-Anschluss 285 ansteuert und schließt. In der dritten Schaltstellung ist der zweite Anschluss 140 elektrisch über die achte Verbindung 275 und den vierten Knotenpunkt 265 mit der siebten Verbindung 270 verbunden. Über das geschlossene dritte Schaltelement 170 verbindet die siebte Verbindung 270 mit der fünften Verbindung 250 und dem dritten Knotenpunkt 235 elektrisch. Dadurch ist der zweite Anschluss 140 elektrisch mit dem vierten Anschluss 150 verbunden. Ferner steuert die Steuereinrichtung 180 in der dritten Schaltstellung das vierte Schaltelement 175 derart an, dass das vierte Schaltelement 175 geöffnet ist und der vierte Source-Anschluss 245 von dem vierten Drain-Anschluss 280 elektrisch getrennt ist.

In der vierten Schaltstellung ist die zweite Schalteinheit 155 umgekehrt zu der dritten Schaltstellung geschalten. Dabei ist das dritte Schaltelement 170 geöffnet und der dritte Drain-Anschluss 260 ist elektrisch vom dritten Source-Anschluss 240 getrennt. Das vierte Schaltelement 175 wird durch die Steuereinrichtung 180 am Gate-Anschluss 285 derart angesteuert, dass das vierte Schaltelement 175 geschlossen ist. Das geschlossene vierte Schaltelement 175 verbindet den zweiten Anschluss 140 über die achte Verbindung 275 mit der sechsten Verbindung 255 und dem zweiten Knotenpunkt 230, sodass der dritte Anschluss 145 mit dem zweiten Anschluss 140 elektrisch verbunden ist.

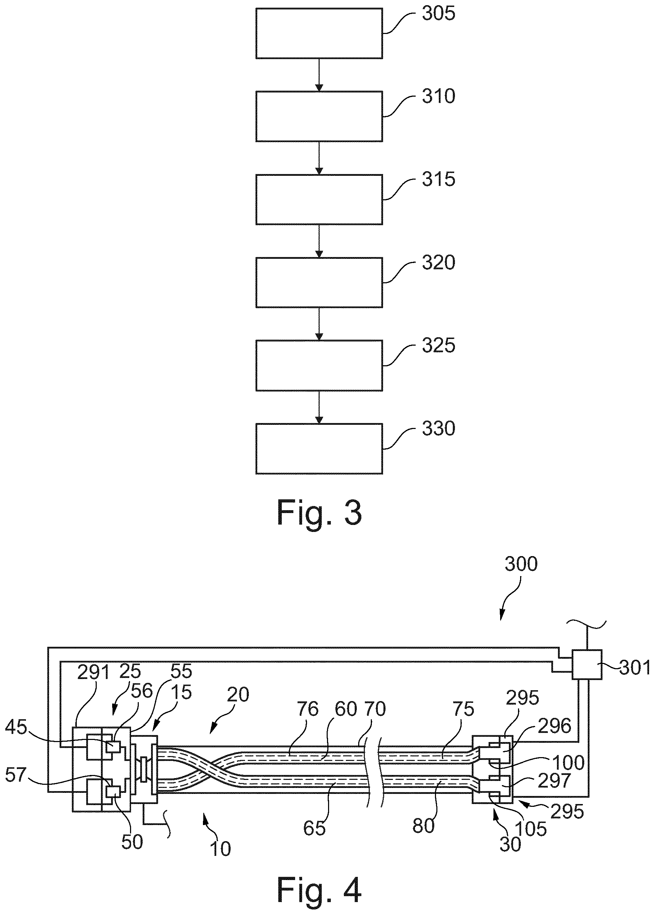

Figur 3 zeigt ein Ablaufdiagramm eines Verfahrens zur Herstellung des in den Figuren 1 und 2 gezeigten Verbindersystems 10. Figur 4 zeigt eine schematische Darstellung eines Testsystems 300 mit dem Verbindersystem 10.

In einem ersten Verfahrensschritt 305 werden die bereits vorgefertigten elektrischen Kabel 60, 65 des Kabelstrangs 20 verlegt, beispielsweise in Gabeln eines Montagebretts eingehängt oder in eine Form eines Schaumsystems eingelegt. An den elektrischen Kabeln 60, 65 ist beidseitig jeweils das zugeordnete Kontaktelement 45, 50, 85, 90 befestigt.

In einem zweiten Verfahrensschritt 310 wird die zweite Kontakteinrichtung 30 durch das Einstecken des dritten und vierten Kontaktelemente 85, 90 montiert. Ziel ist es, dass die zweite Kontakteinrichtung 30 gemäß der zweiten Sollbelegung mit den jeweiligen dritten und vierten Kontaktelementen 85, 90 bestückt wird. Die erste Schalteinrichtung 15 ist elektrisch zwischen der ersten Kontakteinrichtung 25 und dem Kabelstrang 20 angeordnet. Die erste Kontakteinrichtung 25 kann direkt mit der ersten Seite 125 elektrisch verbunden werden. Die erste Istbelegung kann der ersten Sollbelegung entsprechen. Beim Bestücken der zweiten Kontakteinrichtung 30 können jedoch Fehler auftreten, sodass die erste Istbelegung von der ersten Sollbelegung und/oder die zweite Istbelegung von der zweiten Sollbelegung abweicht. Dadurch ist das erste Kontaktelement 45 elektrisch mit dem vierten Anschluss 150 und das zweite Kontaktelement 50 mit dem dritten Anschluss 145 elektrisch verbunden.

In einem dritten Verfahrensschritt 315 wird die erste Kontakteinrichtung 25 mit einer ersten Testkontakteinrichtung 291 des Testsystems 300 kontaktiert. Die erste Testkontakteinrichtung 291 kann identisch zu der ersten Gegenkontakteinrichtung 35 ausgebildet sein. Ferner wird datentechnisch die Steuereinrichtung 180 mit dem Testgerät 301 verbunden.

Ferner kann die zweite Kontakteinrichtung 30 mit einer zweiten Testkontakteinrichtung 295 des Testsystems 300 kontaktiert werden. Die zweite Testkontakteinrichtung 295 kann korrespondierend zu der zweiten Kontakteinrichtung 30 ausgebildet sein und einen dritten und vierten Gegenkontakt 296, 297 aufweisen. Die erste Testkontakteinrichtung 291 und die zweite Testkontakteinrichtung 295 sind mit einem Testgerät 301 des Testsystems 300 jeweils elektrisch verbunden.

In einem vierten Verfahrensschritt 320 ermittelt das Testgerät 301 mittels Durchgangsprüfung eine elektrische Kabelbaumbelegung, die einer Zusammenfassung der ersten und zweiten Istbelegung entspricht. Dazu ist die erste und zweite Schalteinheit 120, 155 derart durch die Steuereinrichtung 180 geschalten, als ob die erste Istbelegung der ersten Sollbelegung und die zweite Istbelegung der zweiten Sollbelegung entspricht.

Bei dem in Figur 4 gezeigten Beispiel ermittelt das Testgerät 301, dass der erste Gegenkontakt 110 elektrisch mit dem vierten Gegenkontakt 297 und der zweite Gegenkontakt 115 mit dem dritten Gegenkontakt 296 elektrisch verbunden ist. Wäre beispielsweise die zweite Kontakteinrichtung 30 gemäß der zweiten Sollbelegung gesteckt, wäre der erste Gegenkontakt 110 durch das Verbindersystem 10 mit dem dritten Gegenkontakt 296 und der vierte Gegenkontakt 297 mit dem zweiten Gegenkontakt 115 durch das Verbindersystem 10 elektrisch verbunden.

In einem fünften Verfahrensschritt 325 vergleicht das Testgerät 301 die ermittelte Kabelbaumistbelegung des Verbindersystems 10 mit einer Kabelbaumsollbelegung, die in einem Datenspeicher des Testgeräts 301 abgelegt ist.

Weicht die ermittelte Kabelbaumistbelegung von der Kabelbaumsollbelegung ab, so fährt das Testgerät 301 mit einem sechsten Verfahrensschritt 330 fort. Entspricht die Kabelbaumistbelegung der Kabelbaumsollbelegung, so gibt das Testgerät 301 eine Information aus. Das Verfahren kann in diesem Fall beendet werden und die Testkontakteinrichtungen 291, 295 können abgesteckt werden.

Im sechsten Verfahrensschritt 330 ermittelt das Testgerät 301 beispielsweise auf Grundlage der ermittelten Kabelbaumistbelegung und Kabelbaumsollbelegung einen Korrekturschaltstellung der ersten bis vierten Schaltelemente 160, 165, 170, 175 und stellt den ermittelten Korrekturschaltstellung der Steuereinrichtung 180 als Datensignal bereit.

In einem auf dem sechsten Verfahrensschritt 330 folgenden siebten Verfahrensschritt 335 erfasst die Steuereinrichtung 180 die Korrekturschaltstellung und schaltet die ersten bis vierten Schaltelemente 160, 165, 170, 175 auf Grundlage der ermittelten Korrekturschaltstellung und speichert die Korrekturschaltstellung. Die Schaltung der ersten bis vierten Schaltelemente 160, 165, 170, 175 kann bistabil erfolgen.

In dem in Figur 4 gezeigten Beispiel weist die Korrekturschaltstellung die Schaltung der ersten Schalteinheit 120 in die zweite Schaltstellung und die Schaltung der zweiten Schalteinheit 155 in die vierte Schaltstellung auf. Durch die Schaltung der ersten und zweiten Schalteinheiten 120, 155 in die Korrekturstellung werden die erste und/oder zweite Istbelegung und die Kabelbaumistbelegung dahingehend korrigiert, dass die erste Kontakteinrichtung 25 mit der ersten Sollbelegung und die zweite Kontakteinrichtung 30 mit der zweiten Sollbelegung belegt ist, obwohl die zweite Kontakteinrichtung 30 vertauscht gesteckt ist.

Diese Ausgestaltung hat den Vorteil, dass dadurch die Kabelbaumistbelegung durch die Korrekturschalstellung der ersten Schalteinrichtung 15 korrigiert wird und dadurch ein aufwendiges Fehlersuchen oder eine Demontage eines bereits in das Kraftfahrzeug 500 eingebauten fehlbelegten Kabelbaums vermieden werden kann. Dadurch kann das Verbindersystem 10 ohne weitere Nacharbeiten an das Steuergerät 40 (vgl. Figur 1) angeschlossen werden, und beispielsweise das Steuergerät 40 mit einer weiteren elektrischen Komponente 415 beispielsweise einem Verbraucher 515, beispielsweise einem Fensterheber oder einem Scheinwerfer, verbinden.

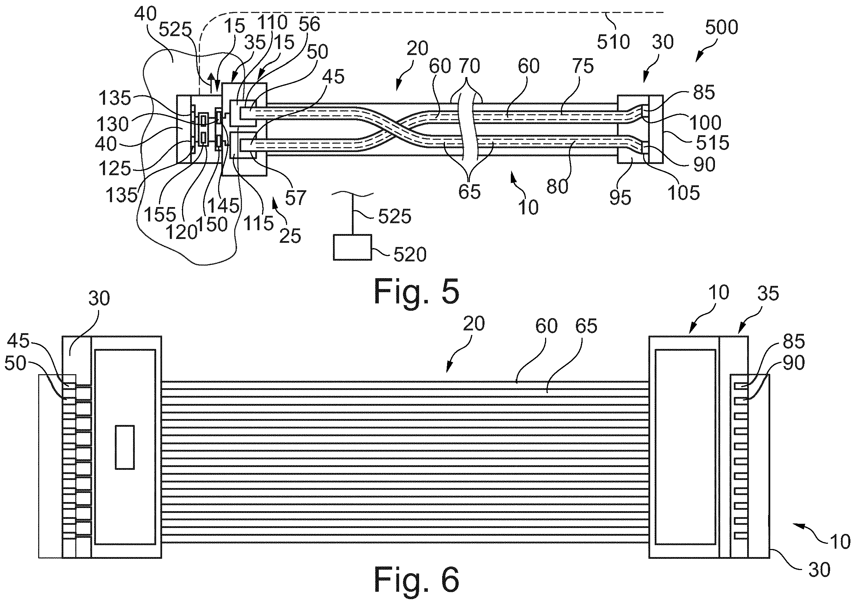

Figur 5 zeigt eine schematische Darstellung eines Verbindersystems 10 gemäß einer zweiten Ausführungsform.

Das Verbindersystem 10 ist im Wesentlichen identisch zu dem in den Figuren 1 bis 4 erläuterten Verbindersystem 10 ausgebildet. Im Folgenden wird ausschließlich auf die Unterschiede der in Figur 5 gezeigten Ausgestaltung gegenüber der in den Figuren 1 bis 4 gezeigten Ausgestaltung eingegangen.

In Figur 5 ist die erste Schalteinrichtung 15 elektrisch zwischen der ersten Gegenkontakteinrichtung 35 und dem Steuergerät 40 angeordnet. Die erste Schalteinrichtung 15 kann Teil des Steuergeräts 40 sein und insbesondere in das Steuergerät 40 integriert sein. Dabei ist die zweite Seite 130 mit der ersten Gegenkontakteinrichtung 35 und die erste Seite 125 mit dem Steuergerät 40 verbunden.

Beispielhaft ist hierbei der dritte Anschluss 145 mit dem ersten Gegenkontakt 110 und der vierte Anschluss 150 mit dem zweiten Gegenkontakt 115 verbunden.

Das erste Kontaktelement 45 ist an einem dem dritten Kontaktelement 85 gegenüberliegenden Ende mit dem ersten elektrischen Leiter 75 und das zweite Kontaktelement 50 ist an einem dem vierten Kontaktelement 90 gegenüberliegenden Ende mit dem zweiten Kontaktelement 50 elektrisch und mechanisch verbunden.

Durch die Möglichkeit, das erste Kontaktelement 45 sowohl in die erste Kontaktaufnahme 56 als auch in die zweite Kontaktaufnahme 57 einzustecken, weist die erste Kontakteinrichtung 25 die erste Istbelegung auf, die im Idealfall der ersten Sollbelegung entspricht, aber auch von der ersten Sollbelegung abweichen kann.

Die Fehlbelegung des Verbindersystems 10 kann mittels dem in Figur 3 beschriebenen Verfahren korrigiert werden, sodass das Verbindersystem 10 unabhängig davon, ob die erste und/oder zweite Istbelegung von der jeweiligen Sollbelegung abweicht, durch entsprechende Schaltung der ersten Schalteinrichtung 15 in die erste Korrekturschaltstellung das elektrische Verbindersystem 10 die Kabelbaumsollbelegung aufweist und eine korrekte Signalübertragung und/oder Leistungsübertragung sichergestellt ist.

Figur 6 zeigt eine schematische Darstellung eines Verbindersystems 10 gemäß einer dritten Ausführungsform.

Das Verbindersystem 10 ist im Wesentlichen identisch zu dem in den Figuren 1 bis 4 gezeigten Verbindersystem 10 ausgebildet. Abweichend zu der in Figur 1 bis 3 gezeigten Ausgestaltung ist die dritte Anzahl der elektrischen Kabel 60, 65 im Kabelstrang 20 gegenüber der in den Figuren 1 und 2 gezeigten Ausgestaltung deutlich erhöht. In Figur 6 ist dabei die Sollbelegung der Kontakteinrichtung 25, 30 dargestellt.

Entsprechend der erhöhten dritten Anzahl von elektrischen Kabeln 60, 65 ist auch eine entsprechend erhöhte zweite und fünfte Anzahl von Kontaktelementen 45, 50, 85, 90 vorgesehen. In Figur 5 sind die elektrischen Kabel 60, 65 entsprechend ihrer Sollbelegung gesteckt und dadurch parallel zueinander geführt. Dadurch kann ein Verknicken der elektrischen Kabel 60, 65 im Kabelstrang 20 verhindert werden. Ferner wird eine übermäßige Zugbelastung der elektrischen Kabel 60, 65 verhindert. Die erste und zweite Sollbelegung der Kontakteinrichtungen 25, 30 ist dabei so, dass ein Überkreuzen der elektrischen Kabel 60, 65 im Kabelstrang 20 verhindert wird.

Figur 7 zeigt eine schematische Darstellung des in Figur 6 gezeigten Verbindersystems 10.

In Figur 7 weicht die zweite Kontakteinrichtung 30 in ihrer zweiten Istbelegung von der zweiten Sollbelegung ab, wodurch die elektrischen Kabel 60, 65 des Kabelstrangs 20 teilweise überkreuzend geführt sind.

Die erste Schalteinrichtung 15 weist eine entsprechend der elektrischen Kabel 60, 65 des Kabelstrangs 20 entsprechende sechste Anzahl von ersten und zweiten Schalteinheiten 120, 155 auf. Die Anschlüsse 135, 140, 145, 150 wurden in ihrer neunten Anzahl entsprechend der sechsten Anzahl gewählt. Dadurch sind die erste Seite 125 und die zweite Seite 130 gegenüber der in den Figuren 1 bis 4 gezeigten Ausgestaltung erweitert.

Dadurch kann jeder der dritten und vierten Anschlüsse 145, 150 mit jeweils einem der elektrischen Kabel 60, 65 elektrisch verbunden sein.

Das in Figur 7 beschriebene Verfahren ist entsprechend ebenso anwendbar, sodass auch bei einer Vielzahl von überkreuzten elektrischen Kabeln 60, 65 und falsch gesteckten Kontaktelementen 45, 50, 85, 90 die erste und zweite Sollbelegung der ersten und zweiten Kontakteinrichtung 25, 30 durch Ermittlung der Korrekturschaltzustände und entsprechende Schaltung der ersten Schalteinrichtung 15 hergestellt werden.

Diese Ausgestaltung hat den Vorteil, dass beim Kontaktieren der Kontakteinrichtungen 25, 30 mit den Kontaktelementen 45, 50, 85, 90 keine Rücksicht auf die jeweilige Sollbelegung der Kontakteinrichtung 25, 30 genommen werden muss, sondern die entsprechende erste und/oder zweite Sollbelegung durch die Korrekturschaltstellung der ersten Schalteinrichtung 15 hergestellt wird.

Ferner kann anstatt der Anordnung der ersten Schalteinrichtung 15 zwischen der ersten Kontakteinrichtung 25 und dem Kabelstrang 20 die erste Schalteinrichtung 15 Teil des Kabelstrangs 20 sein, sodass die erste und zweite Seite 125, 130 jeweils mit elektrischen Kabeln 60, 65 des Kabelstrangs 20 mechanisch und elektrisch verbunden ist. Dadurch können beide Kontakteinrichtungen 25, 30 besonders gut mit Kontaktelementen 45, 50, 85, 90 bestückt werden.

Figur 8 zeigt eine schematische Darstellung eines Verbindersystems 10 gemäß einer vierten Ausführungsform.

Das Verbindersystem 10 ist im Wesentlichen identisch zu dem in den Figuren 1 bis 4 gezeigten Verbindersystem 10 ausgebildet. Im Folgenden wird ausschließlich auf die Unterschiede des in Figur 8 gezeigten Verbindersystems 10 gegenüber dem in den Figuren 1 bis 4 gezeigten Verbindersystem 10 eingegangen. Dabei zeigt Figur 8 das erfindungsgemäße Verbindungssystem 10.

Der Kabelstrang 20 weist zusätzlich ein Ersatzkabel 400 und eine zweite Schalteinrichtung 405 auf. Die zweite Schalteinrichtung 405 ist elektrisch zwischen der zweiten Kontakteinrichtung 30 und dem Kabelstrang 20 angeordnet. Auch könnte die zweite Schalteinrichtung 405, ähnlich wie in Figur 5 gezeigt, beispielsweise zwischen einer zweiten Gegenkontakteinrichtung 410 und einer weiteren elektrischen Komponente 415, beispielsweise einem Verbraucher, angeordnet sein. Die zweite Gegenkontakteinrichtung 410 kontaktiert mechanisch und elektrisch in montiertem Zustand des Verbindersystems 10 in dem Kraftfahrzeug 500 die zweite Kontakteinrichtung 30.

Die erste Schalteinrichtung 15 ist an der zweiten Seite 130 zusätzlich mit dem Ersatzkabel 400 elektrisch verbunden. Die zweite Schalteinrichtung 405 ist beispielhaft identisch zu der ersten Schalteinrichtung 15 ausgebildet und weist beispielhaft eine dritte Seite 420 und eine vierte Seite 425 auf. Die vierte Seite 425 ist mit der zweiten Kontakteinrichtung 30 elektrisch verbunden. Die dritte Seite 420 ist mit allen elektrischen Kabeln 60, 65 und mit dem Ersatzkabel 400 des Kabelstrangs 20 elektrisch verbunden.

Die zweite Schalteinrichtung 405 weist vorzugsweise wenigstens eine dritte Schalteinheit 430 und eine vierte Schalteinheit 435 auf, wobei eine zehnte Anzahl der vorgesehenen dritten und vierten Schalteinheiten 430, 435 der fünften Anzahl der dritten und vierten Kontaktelemente 85, 90 der zweiten Kontakteinrichtung 30 bzw. der zweiten Anzahl der ersten und zweiten Kontaktelemente 45, 50 der ersten Kontakteinrichtung 25 entspricht.

In Figur 8 ist beispielhaft, wie in den Figuren 1 bis 4 beschrieben, das erste und zweite elektrische Kabel 60, 65 ungewollt verdreht, sodass hierbei bei normaler Kontaktierung der Kontaktelemente 45, 50, 85, 90 die Kontakteeinrichtungen 25, 30 fehlbelegt sind und von der ersten und zweiten Sollbelegung der Kontakteinrichtungen 25, 30 abweichen.

Zusätzlich ist in Figur 8 beispielhaft der erste elektrische Leiter 75 beschädigt, sodass der erste elektrische Leiter 75 unterbrochen ist und keine elektrische Verbindung zwischen der ersten Schalteinrichtung 15 und der zweiten Schalteinrichtung 405 ermöglicht. Alternativ kann auch der erste elektrische Leiter 75 derart beschädigt sein, dass ein ohmscher Widerstand des ersten elektrischen Leiters 75 erhöht ist.

Die erste Schalteinrichtung 15 und die zweite Schalteinrichtung 405 sind entsprechend an die erhöhte Anzahl von elektrischen Kabeln 60, 65, 400 im Kabelstrang 20 gegenüber der in den Figuren 1 bis 4 Ausgestaltung dahingehend angepasst, dass die siebte und achte Anzahl der ersten bis vierten Schaltelemente 160, 165, 170, 175 der dritten Anzahl der elektrischen Kabel 60, 65 und einer Summe von Ersatzkabeln 400 (sofern mehr als ein Ersatzkabel 400 im Kabelstrang 20 verbaut ist) entspricht. Die sechste Anzahl der ersten und zweiten Schalteinheiten 120, 155 entspricht der zweiten und fünften Anzahl von Kontaktelementen 45, 50, 85, 90.

Figur 9 zeigt einen Ausschnitt einer schematischen Darstellung des in Figur 8 gezeigten Verbindersystems 10.

Die erste und zweiten Schalteinheit 120, 155 ist für jeweils ein Ersatzkabel 400 um jeweils ein zusätzliches fünftes und sechstes Schaltelement 440, 445 ergänzt. Das zusätzliche fünfte und sechste Schaltelement 440, 445 ist beispielhaft als MOSFET ausgebildet und beispielsweise jeweils an einem zusätzlichen Gate-Anschluss 450 mit der Steuereinrichtung 180 verbunden.

Durch die identische Ausgestaltung der ersten Schalteinrichtung 15 zu der zweiten Schalteinrichtung 405 ist entsprechend auch identisch die dritte und vierte Schalteinheit 430, 435 zur ersten und zweiten Schalteinheit 120, 155 ausgebildet.

Das in Figur 3 erläuterte Verfahren kann auch für das in den Figuren 8 und 9 gezeigte Verfahren durchgeführt werden. Das Verfahren eignet sich insbesondere dazu, die Kabelbaumistbelegung zu korrigieren.

Zusätzlich steuert das Testgerät 301 nicht nur die Steuereinrichtung 180 der ersten Schalteinrichtung 15, sondern auch die Steuereinrichtung 180 der zweiten Schalteinrichtung 405 im vierten Verfahrensschritt 320 derart an, als ob die erste Istbelegung der ersten Sollbelegung und die zweite Istbelegung der zweiten Sollbelegung entspricht.

Zusätzlich wird im Rahmen der Durchgangsprüfung der elektrischen Kabel 60, 65 ermittelt, welcher der elektrischen Leiter 75, 80 des Kabelstrangs 20 beschädigt oder unterbrochen ist. Dazu kann im Rahmen der Durchgangsprüfung das Testgerät 301 den elektrischen Widerstand jedes elektrischen Kabels 60, 65 des Kabelstrangs 20 ermitteln, insbesondere messen.

Das Ersatzkabel 400 kann ebenfalls im Rahmen der Durchgangsprüfung überprüft werden und gegebenenfalls ein elektrischer Widerstand des Ersatzkabels 400 gemessen werden. Dazu steuert das Testgerät 301 entsprechend die Steuereinrichtung 180 derart an, sodass über die Kontakteinrichtungen 25, 30 und die Schalteinrichtungen 15, 405 das Ersatzkabel 400 mit dem Testgerät 301 elektrisch verbunden ist.

In einem zusätzlichen Verfahrensschritt vergleicht das Testgerät 301 die ermittelten elektrischen Widerstände mit einem in einem Datenspeicher des Testgeräts 301 abgespeicherten vordefinierten Widerstand. Unterschreitet der gemessene Widerstand den vordefinierten Widerstand, so weist das entsprechende elektrische Kabel 60, 65 und/oder das Ersatzkabel 400 keinen Schaden auf. Überschreitet der gemessene Widerstand für das zugeordnete elektrische Kabel 60, 65 den vordefinierten Widerstand, ist das elektrische Kabel 60, 65 und/oder das Ersatzkabel 400 beschädigt.

Sind alle elektrischen Kabel 60, 65 und das Ersatzkabel 400 schadensfrei, wird das Verfahren wie in Figur 3 beschreiben weiter durchgeführt. Das Ersatzkabel 400 bleibt unberücksichtigt und wird mit keinem der Kontaktelemente 45, 50, 85, 90 durch die Korrekturschaltstellung elektrisch verbunden.

Ist eines der elektrischen Kabel 60, 65 und/oder das Ersatzkabel 400 beschädigt, so berücksichtigt das Testgerät 301 dies bei der Ermittlung der Korrekturschaltstellung. Gemäß der ermittelten Korrekturschaltstellung werden die ersten und zweiten Schalteinrichtungen 15, 405 geschalten. Die Korrekturschaltstellung ist dabei derart bestimmt, dass zum einen die Kontakteinrichtungen 25, 30 gemäß der ersten und zweiten Sollbelegung miteinander verbunden sind, zum anderen, dass das defekte elektrische Kabel 60, 65, beispielsweise das erste elektrischen Kabel 60, durch das Ersatzkabel 400 elektrisch überbrückt ist. Dabei können die erste und/oder zweite Schalteinrichtung 15, 405 derart geschalten sein, dass das defekte erste elektrische Kabel 60 elektrisch von den Kontakteinrichtungen 25, 30 getrennt ist.

Diese Ausgestaltung hat den Vorteil, dass kein zusätzlicher weiterer Kabelstrang zu dem oben beschrieben Verbindersystem 10 zu verlegen ist, um eine Redundanz im Kraftfahrzeug 500 bei einem Ausfall oder einer Beschädigung, beispielsweise bei der Montage des Kabelstrangs 20, sicherzustellen. Durch die entsprechende Schaltung der Schalteinrichtungen 15, 405 kann das beschädigte erste oder zweite elektrische Kabel 60, 65 durch das Ersatzkabel 400 überbrückt werden. Durch das Ersatzkabel 400 kann der Kabelstrang 20 nach wie vor kompakt gehalten werden, da sich ein Außendurchmesser durch das zusätzliche Ersatzkabel 400 des Kabelstrangs 20 nur geringfügig erhöht.

Zusätzlich kann die Schalteinrichtung 15, 405 durch das Testgerät 301 auch derart angesteuert werden, dass die erste und zweite Schalteinrichtung 15, 405, das Ersatzkabel 400 parallel zum ersten oder zweiten elektrischen Kabel 60 geschaltet. Durch die Parallelschaltung kann ein besonders hoher elektrischer Strom durch das erste oder zweite elektrische Kabel 60, 65 und das Ersatzkabel 400 zwischen der ersten und zweiten Schalteinrichtung 15, 450 übertragen werden. Ferner wird eine thermische Überhitzung des ersten elektrischen Kabels 60 und des Ersatzkabels 400 vermieden. Diese Ausgestaltung hat ferner den Vorteil, dass ein Derating des Kabelstrangs 20, insbesondere des ersten oder zweiten elektrischen Kabels 60, 65 und des Ersatzkabels 400, geringgehalten oder vermieden wird.

Die Korrekturschaltstellung wird jeweils durch das Steuergerät 180 der ersten und zweiten Schalteinrichtung 15, 405 dauerhaft gespeichert. Dadurch kann auch nach Abtrennen des Testsystems 300 von dem Verbindersystem 10 die entsprechende Schaltung der Schalteinrichtungen 15, 405 aufrechterhalten werden.

In Figur 8 und 9 sind die erste Schalteinrichtung 15 und die zweite Schalteinrichtung 405 jeweils identisch zueinander ausgebildet. Dadurch kann die Bauteilanzahl des Verbindersystems 10 besonders niedrig gehalten werden. Alternativ könnte auch die zweite Schalteinrichtung 405 als eine Anordnung von parallel angeordneten Dioden, insbesondere Sperrdioden, ausgebildet sein, wobei die Dioden die gleiche Ausrichtung zueinander aufweisen. Dadurch wird ein Rückfluss über das überbrückte erste elektrische Kabel 60 von der zweiten Schalteinrichtung 405 hin zu der ersten Schalteinrichtung 15 durch die Dioden verhindert.

Zusätzlich kann die erste oder zweite Schalteinrichtung 15, 405 einen ersten Sensor 460 aufweisen, wobei der erste Sensor 460 eine Information über einen Betriebsparameter des Verbindersystems 10 der Steuereinrichtung 180 bereitstellt. Der erste Sensor 460 kann integriert in die erste und zweite Schalteinrichtung 15, 405 ausgebildet sein. Der erste Sensor 460 ist jeweils beispielsweise mit der Steuereinrichtung 180 datentechnisch verbunden und stellt beispielsweise als Betriebsparameter eine Temperatur der Schalteinrichtung 15, 405 und/oder einen über die Schalteinrichtung 15, 405 übertragenen Strom bereit. Die Steuereinrichtung 180 kann die Information bei der Schaltung der Schalteinheiten 120, 155, 430, 435 berücksichtigen. Insbesondere kann beispielsweise bei einem starken Anstieg der Temperatur oder des Stroms die Steuereinrichtung 180 das Ersatzkabel 400 parallel zu dem vorzugsweise am stärksten erwärmten oder mit elektrischen Strom belasteten elektrischen Kabel 60, 65 schalten.

Figur 10 zeigt eine schematische Darstellung des Kraftfahrzeugs 500.

Das Kraftfahrzeug 500 weist ein Fahrzeugsteuergerät 505, einen elektrischen Verbraucher 515, eine elektrische Stromquelle 516 und ein Verbindersystem 10 auf. Das Verbindersystem 10 ist beispielhaft wie in Figur 5 erläutert ausgebildet. Das Fahrzeugsteuergerät 505 ist mittels einer zehnten Verbindung 510 mit der Steuereinrichtung 180 des Verbindersystems 10 datentechnisch verbunden. Die zehnte Verbindung 510 kann beispielsweise Teil eines Bussystems, beispielsweise eines CAN-Busses, sein. Das Verbindersystem 10 kann beispielsweise im Kraftfahrzeug 500 verlegt sein. Das Verbindersystem 10 ist über die erste Kontakteinrichtung 25 und die erste Schalteinrichtung 15 mit der elektrischen Stromquelle 516 und mit der zweiten Kontakteinrichtung 30 mit dem Verbraucher 30 verbunden. Dabei verbindet das Verbindersystem 10 den Verbraucher 515 mit der elektrischen Stromquelle 516 zur Übertragung elektrischer Leistung elektrisch.

Der Verbraucher 515 kann beispielsweise ein Scheinwerfer, ein elektrischer Fensterheber, eine elektrische Scheibenheizung oder ein Lüftermotor sein. Die elektrische Stromquelle 516 kann beispielsweise ein elektrisches 12V-, 24V- oder 48V-Versorgungsnetz des Kraftfahrzeugs sein.

Das Fahrzeugsteuergerät 505 kann mittels einer elften Verbindung 517 mit einem Schalter 518 datentechnisch verbunden sein. Der Schalter 518 kann beispielsweise im Bereich des Armaturenbretts des Kraftfahrzeugs 500 angeordnet sein, wobei mit dem Schalter 518 ein Wunsch des Fahrers des Kraftfahrzeugs zur Aktivierung oder Deaktivierung des Verbrauchers 515 erfasst wird.

Der Schalter 518 stellt eine Information über eine Schaltposition des Schalters 518 mittels eines Schaltersignals über die elfte Verbindung 517 an das Fahrzeugsteuergerät 505 bereit. Das Fahrzeugsteuergerät 505 steuert mittels eines Steuersignals die Steuereinrichtung 180 derart an, dass die Steuereinrichtung 180 zur Leistungsübertragung zwischen der elektrischen Stromquelle 516 und dem Verbraucher 515 die ersten und zweiten Schalteinheiten 120, 155 in die Korrekturschaltstellung schaltet.

Um den Verbraucher 515 zu deaktivieren und eine Stromübertragung zwischen dem Verbraucher 515 und der elektrischen Stromquelle 516 zu unterbrechen, werden die ersten bis vierten Schaltelemente 160, 165, 170, 175 geöffnet. Beispielweise liegt keine elektrische Spannung am Gate-Anschluss 285, 450 an.

In der Ausführungsform kann beispielsweise der Verbraucher 515 ein Scheinwerfer sein. Das Kraftfahrzeug 500 kann ferner einen zusätzlicher zweiten Sensor 520 aufweisen. Der zweite Sensor 520 ist mittels einer zwölften Verbindung 525 mit der ersten Schalteinrichtung 15 datentechnisch verbunden. Die zwölfte Verbindung 525 kann beispielsweise Teil eines Bussystems im Kraftfahrzeug 500 sein.

Der zweite Sensor 520 kann beispielsweise als Helligkeitssensor ausgebildet sein. Auch eine andere Ausgestaltung des zweiten Sensors 520 ist denkbar. In der Ausführungsform als Helligkeitssensor stellt der zweite Sensor 520 die Information über die erfasste Helligkeit über die zwölfte Verbindung 525 der ersten Schalteinrichtung 15 bereit.

Die erste Schalteinrichtung 15 erfasst die über die zwölfte Verbindung 525 bereitgestellte Information. Die Steuereinrichtung 180 berücksichtigt die bereitgestellte Information im Betrieb des Kraftfahrzeugs 500. So kann beispielsweise die Steuereinrichtung 180 eine durch den Sensor 460, 520 ermittelte Helligkeit mit einem in der Steuereinrichtung 180 abgespeicherten vordefinierten Helligkeitswert vergleichen.

Die Steuereinrichtung 180 ist ausgebildet, die erste und zweite Schalteinheit 120, 155 in Abhängigkeit der ermittelten Helligkeit ansteuern. Dabei kann die Steuereinrichtung 180 die erste und zweite Schalteinheit 120, 155 bei Überschreiten der vordefinierten Helligkeit durch die ermittelte Helligkeit derart schalten, dass die Stromübertragung zwischen elektrischer Stromquelle 516 und Verbraucher 515 unterbrochen ist. Bei Unterschreiten der vordefinierten Helligkeit durch die ermittelte Helligkeit schaltet die Steuereinrichtung 180 die ersten und zweiten Schalteinheiten 120, 155 in die Korrekturschaltstellung, sodass elektrischer Strom zwischen dem Verbraucher 515, beispielsweise des Scheinwerfers und der elektrischen Stromquelle 516, übertragen wird.

Diese Ausgestaltung hat den Vorteil, dass autark, ohne Ansteuerung durch das Fahrzeugsteuergerät 505, den Verbraucher 515 des Kraftfahrzeugs 500, in der Ausführungsform beispielhaft des Scheinwerfers, aktiviert oder deaktiviert wird. Durch die direkte datentechnische Anbindung des zweiten Sensors 520 mit der ersten Schalteinrichtung 15 des Verbindersystems 10 fällt die Reaktion besonders schnell aus. Ferner wird dadurch das Fahrzeugsteuergerät 505 entlastet. Im Fehlerfall, beispielsweise bei einem Fehler im Fahrzeugsteuergerät 505, wird somit immer noch ein Notbetrieb und das Einschalten des Verbrauchers 515, beispielsweise des Scheinwerfers, sichergestellt. Dabei kann auf eine datentechnische Anbindung des zweiten Sensors 520 an das Fahrzeugsteuergerät 505 verzichtet werden.

### Bezugszeichen

- 10: Verbindersystem
- 15: erste Schalteinrichtung
- 20: Kabelstrang
- 25: erste Kontakteinrichtung
- 30: zweite Kontakteinrichtung
- 35: erste Gegenkontakteinrichtung
- 40: Steuergerät
- 41: elektrische Komponente
- 45: erstes Kontaktelement
- 50: zweites Kontaktelement
- 55: erstes Kontaktgehäuse
- 56: erste Kontaktaufnahme
- 57: zweite Kontaktaufnahme
- 60: erstes elektrisches Kabel
- 65: zweites elektrisches Kabel
- 70: Ummantelung
- 75: erster elektrischer Leiter
- 76: erste Leiterisolierung
- 77: zweite Leiterisolierung
- 80: zweiter elektrischer Leiter
- 85: drittes Kontaktelement
- 90: viertes Kontaktelement
- 95: zweites Kontaktgehäuse
- 100: dritte Kontaktaufnahme
- 105: vierte Kontaktaufnahme
- 110: erster Gegenkontakt
- 115: zweiter Gegenkontakt
- 120: erste Schalteinheit
- 125: erste Seite
- 130: zweite Seite
- 135: erster Anschluss
- 140: zweiter Anschluss
- 145: dritter Anschluss
- 150: vierter Anschluss
- 155: zweite Schalteinheit
- 160: erstes Schaltelement
- 165: zweites Schaltelement
- 170: drittes Schaltelement
- 175: viertes Schaltelement
- 180: Steuereinrichtung
- 185: erster Drain-Anschluss
- 190: erste Verbindung
- 195: erster Knotenpunkt
- 200: zweite Verbindung
- 205: zweiter Drain-Anschluss
- 210: erster Source-Anschluss
- 215: dritte Verbindung
- 220: zweiter Source-Anschluss
- 225: vierte Verbindung
- 230: zweiter Knotenpunkt
- 235: dritter Knotenpunkt
- 240: dritter Source-Anschluss
- 245: vierter Source-Anschluss
- 250: fünfte Verbindung
- 255: sechste Verbindung
- 260: dritter Drain-Anschluss
- 265: vierter Knotenpunkt
- 270: siebte Verbindung
- 275: achte Verbindung
- 280: vierter Drain-Anschluss
- 285: Gate-Anschluss
- 290: neunte Verbindung
- 291: erste Testkontakteinrichtung
- 295: zweite Testkontakteinrichtung
- 296: dritter Gegenkontakt
- 297: vierter Gegenkontakt
- 300: Testsystem
- 301: Testgerät
- 305: erster Verfahrensschritt
- 310: zweiter Verfahrensschritt
- 315: dritter Verfahrensschritt
- 320: vierter Verfahrensschritt
- 325: fünfter Verfahrensschritt
- 330: sechster Verfahrensschritt
- 335: siebter Verfahrensschritt
- 400: Ersatzkabel
- 405: zweite Schalteinrichtung
- 410: zweite Gegenkontakteinrichtung
- 415: weitere elektrische Komponente
- 420: dritte Seite
- 425: vierte Seite
- 430: dritte Schalteinheit
- 435: vierte Schalteinheit
- 440: fünftes Schaltelement
- 445: sechstes Schaltelement
- 450: zusätzlicher Gate-Anschluss
- 460: erster Sensor
- 500: Kraftfahrzeug
- 505: Fahrzeugsteuergerät
- 510: zehnte Verbindung
- 515: Verbraucher
- 516: elektrische Stromquelle
- 517: elfte Verbindung
- 518: Schalter
- 520: zweiter Sensor
- 525: zwölfte Verbindung

## Patentansprüche

1. Verbindersystem (10), insbesondere Kabelbaumsystem,
- wobei das Verbindersystem (10) eine erste Schalteinrichtung (15), einen Kabelstrang (20); eine erste Kontakteinrichtung (25), eine zweite Schalteinrichtung (405) und eine zweite Kontakteinrichtung (30) aufweist,
- wobei der Kabelstrang (20) eine Anordnung einer Vielzahl von elektrischen Kabeln (60, 65) aufweist,
- wobei ein erstes elektrisches Kabel (60) der elektrischen Kabel (60, 65) beschädigt oder unterbrochen ist,
- wobei die erste Schalteinrichtung (15) eine erste Seite (125) und eine zweite Seite (130) aufweist,
- wobei eine der beiden Seiten (125, 130) mit der ersten Kontakteinrichtung (25) elektrisch verbunden ist,
- wobei der Kabelstrang (20) mit der ersten Kontakteinrichtung (25) elektrisch verbunden ist,
- wobei die erste Schalteinrichtung (15) in Abhängigkeit einer ersten Sollbelegung der ersten Kontakteinrichtung (25) in eine Korrekturschaltstellung geschalten ist;
- wobei die zweite Schalteinrichtung (405) eine dritte Seite (420) und eine vierte Seite (425) aufweist,
- wobei die vierte Seite (425) mit der zweiten Kontakteinrichtung (30) und die dritte Seite (420) mit dem Kabelstrang (20) elektrisch verbunden ist,
- wobei die zweite Schalteinrichtung (405) in Abhängigkeit einer zweiten Sollbelegung der zweiten Kontakteinrichtung (30) den Kabelstrang (20) mit der zweiten Kontakteinrichtung (30) elektrisch verbindet;
**dadurch gekennzeichnet, dass**
- der Kabelstrang (20) ein Ersatzkabel (400) aufweist,
- wobei das Ersatzkabel (400) die erste Kontakteinrichtung (25) mit der zweiten Schalteinrichtung (405) elektrisch verbindet,
- wobei die erste und zweite Schalteinrichtung (15, 405) in der Korrekturschaltstellung derart geschalten sind, dass das Ersatzkabel (400) elektrisch das erste elektrische Kabel (60) überbrückt geschalten ist.

2. Verbindersystem (10) nach Anspruch 1,
- wobei die erste Schalteinrichtung (15) zwischen dem Kabelstrang (20) und der ersten Kontakteinrichtung (25) angeordnet ist,
- wobei die erste Seite (125) elektrisch mit der ersten Kontakteinrichtung (25) und die zweite Seite (130) mit dem Kabelstrang (20) verbunden ist,
- wobei die erste Schalteinrichtung (15) in der Korrekturschaltstellung den Kabelstrang (20) elektrisch mit der ersten Kontakteinrichtung (25) verbindet und die erste Kontakteinrichtung (25) mit der ersten Sollbelegung belegt ist.

3. Verbindersystem (10) nach Anspruch 1,
- wobei der Kabelstrang (20) elektrisch und mechanisch mit der ersten Kontakteinrichtung (25) verbunden ist,
- wobei die erste Kontakteinrichtung (25) zwischen der ersten Schalteinrichtung (15) und dem Kabelstrang (20) angeordnet ist,
- wobei die erste Seite (125) mit einer elektrischen Komponente (40) elektrisch verbindbar ist und die zweite Seite (130) mit der ersten Kontakteinrichtung (25) elektrisch verbunden ist,
- wobei jeweils ein Kontaktelement (45, 50) der ersten Kontakteinrichtung (25) mit jeweils einem elektrischen Kabel (60, 65) des Kabelstrangs (20) elektrisch und mechanisch verbunden ist,
- wobei die Kontaktelemente (45, 50) der ersten Kontakteinrichtung (25) mit einer ersten Istbelegung in einem ersten Kontaktgehäuse (55) angeordnet sind,
- wobei die Korrekturschaltstellung in Abhängigkeit der ersten Istbelegung und der ersten Sollbelegung bestimmt ist.

4. Verbindersystem (10) nach einem der vorhergehenden Ansprüche,
- wobei die erste Schalteinrichtung (15) wenigstens eine erste Schalteinheit (120) aufweist,
- wobei die erste Schalteinheit (120) zumindest zwischen einer ersten Schaltstellung und einer zweiten Schaltstellung schaltbar ist,
- wobei die erste Schalteinheit (120) in der ersten Schaltstellung einen ersten Anschluss (135) der ersten Seite (125) mit einem dritten Anschluss (145) der zweiten Seite (130) elektrisch verbindet,
- wobei die erste Schalteinheit (120) in der zweiten Schaltstellung den ersten Anschluss (135) mit einem vierten Anschluss (150) der zweiten Seite (130) elektrisch verbindet,
- wobei in Abhängigkeit der Korrekturschaltstellung der ersten Schalteinrichtung (15) die erste Schalteinheit (120) in die erste Schaltstellung oder in die zweite Schaltstellung geschalten ist.

5. Verbindersystem (10) nach Anspruch 4,
- wobei die erste Schalteinrichtung (15) wenigstens eine zweite Schalteinheit (155) aufweist,
- wobei die zweite Schalteinheit (155) zumindest zwischen einer dritten Schaltstellung und einer vierten Schaltstellung schaltbar ist,
- wobei die zweite Schalteinheit (155) in der dritten Schaltstellung einen zweiten Anschluss (140) der ersten Seite (125) mit dem dritten Anschluss (145) der zweiten Seite (130) elektrisch verbindet,
- wobei die zweite Schalteinheit (155) in der vierten Schaltstellung den zweiten Anschluss (140) mit dem vierten Anschluss (150) der zweiten Seite (130) elektrisch verbindet,
- wobei in Abhängigkeit der Korrekturschaltstellung die zweite Schalteinheit (155) in die dritte Schaltstellung oder in die vierte Schaltstellung geschalten ist.

6. Verbindersystem (10) nach Anspruch 4 oder 5,
- wobei die erste Schalteinheit (120) und/oder die zweite Schalteinheit (155) eine Anordnung aus wenigstens zwei parallel angeordneten Schaltelementen (160, 165, 170, 175) aufweist,
- wobei das Schaltelement (160, 165, 170, 175) einen MOSFET und/oder eine Diode, insbesondere eine Sperrdiode, aufweist,
- und/oder
- wobei das Schaltelement (160, 165, 170, 175) als elektronisches Halbleiter-Bauelement (160, 165, 170, 175) ausgebildet ist,
- und/oder wobei die erste Schalteinrichtung (15) wenigstens einen integrierten Schaltkreis insbesondere ein Field Programmable Gate Array (FPGA) aufweist.

7. Kraftfahrzeug (500)
- aufweisend ein Verbindersystem (10) nach einem der vorhergehenden Ansprüche und ein Fahrzeugsteuergerät (505),
- wobei das Fahrzeugsteuergerät (505) mit der ersten Schalteinrichtung (15) gekoppelt und ausgebildet ist, die erste Schalteinrichtung (15) zu steuern.

8. Kraftfahrzeug (500) nach Anspruch 7,
- wobei das Fahrzeugsteuergerät (505) mit einem Sensor (460) des Verbindersystems (10) verbunden und ausgebildet ist, eine Information des Sensors (460) über einen Betriebsparameter des Verbindersystems (10) zu erfassen,
- wobei das Fahrzeugsteuergerät (505) ausgebildet ist, den Betriebsparameter bei der Steuerung der ersten Schalteinrichtung (15) zu berücksichtigen.

9. Verfahren zur Herstellung eines Verbindersystems (10) nach einem der Ansprüche 1 bis 6,
- wobei ein elektrisches Kabel (60, 65) eines Kabelstrangs (20) eines Verbindersystems (10) verlegt wird,
- wobei der Kabelstrang (20) mit einer ersten Kontakteinrichtung (25) des Verbindersystems (10) elektrisch verbunden wird,
- wobei eine Korrekturschaltstellung einer ersten Schalteinrichtung (15) in Abhängigkeit einer ersten Sollbelegung der ersten Kontakteinrichtung (25) ermittelt wird,
- wobei die Schalteinrichtung (15, 405) in die Korrekturschaltstellung geschalten wird;
- wobei ein elektrischer Widerstand wenigstens eines elektrischen Kabels (60, 65), vorzugsweise aller elektrischen Kabel (60, 65) des Kabelstrangs (20) ermittelt wird,
- wobei der elektrische Widerstand mit einem vordefinierten Widerstand verglichen wird,
**dadurch gekennzeichnet, dass**
- bei Überschreiten des vordefinierten Widerstands durch den ermittelten Widerstand die Korrekturschaltstellung derart angepasst wird, dass das elektrische Kabel (60, 65), dessen elektrischer Widerstand den vordefinierten Widerstand überschreitet, durch ein Ersatzkabel (400) überbrückt wird.

10. Verfahren nach Anspruch 9,
- wobei eine Helligkeit, insbesondere einer Umgebung, gemessen wird,
- wobei die gemessene Helligkeit mit einer vordefinierten Helligkeit verglichen wird,
- wobei bei Unterschreiten der vordefinierten Helligkeit durch die ermittelte Helligkeit die Schalteinrichtung (15) in die Korrekturschaltstellung geschalten wird,
- wobei bei Überschreiten der vordefinierten Helligkeit durch die ermittelte Helligkeit die Schalteinrichtung (15) geöffnet wird und eine Stromübertragung durch die Schalteinrichtung (15) unterbrochen ist.

11. Verfahren nach Anspruch 9 oder 10,
- wobei eine Durchgangsprüfung für jedes elektrische Kabel (60, 65) des Kabelstrangs (20) durchgeführt wird,
- wobei auf Grundlage eines Ergebnisses der Durchgangsprüfung für alle elektrischen Kabel (60, 65) eine erste Istbelegung der Kontakteinrichtung (25, 30) ermittelt wird,
- wobei die erste Istbelegung bei Ermittlung der Korrekturschaltstellung berücksichtigt wird.

12. Verfahren nach einem der Ansprüche 9 bis 11,
- wobei ein elektrischer Widerstand jedes elektrischen Kabels (60, 65) des Kabelstrangs (20) ermittelt wird,
- wobei das elektrische Kabel (60, 65) mit dem größten elektrischen Widerstand bestimmt wird,
- wobei die Korrekturschaltstellung derart bestimmt wird, dass ein Ersatzkabel (400) parallel zu dem elektrischen Kabel (60, 65) mit dem größten elektrischen Widerstand geschalten wird.

## Claims

1. Connector system (10), in particular cable harness system,
- wherein the connector system (10) comprises a first switching device (15), a cable loom (20); a first contact device (25), a second switching device (405) and a second contact device (30),
- wherein the cable loom (20) has an arrangement of a plurality of electrical cables (60, 65),
- wherein a first electrical cable (60) from amongst the electrical cables (60, 65) is damaged or interrupted,
- wherein the first switching device (15) has a first side (125) and a second side (130),
- wherein one of the two sides (125, 130) is electrically connected to the first contact device (25),
- wherein the cable loom (20) is electrically connected to the first contact device (25),
- wherein the first switching device (15) is switched to a correction switching position depending on a first desired assignment of the first contact device (25);
- wherein the second switching device (405) has a third side (420) and a fourth side (425),
- wherein the fourth side (425) is electrically connected to the second contact device (30) and the third side (420) is electrically connected to the cable loom (20),
- wherein the second switching device (405) electrically connects the cable loom (20) to the second contact device (30) depending on a second desired assignment of the second contact device (30); **characterized in that**
- the cable loom (20) has a replacement cable (400),
- wherein the replacement cable (400) electrically connects the first contact device (25) to the second switching device (405),
- wherein the first and the second switching device (15, 405) are switched in the correction switching position in such a way that the replacement cable (400) is electrically connected so as to bypass the first electrical cable (60).

2. Connector system (10) according to Claim 1,
- wherein the first switching device (15) is arranged between the cable loom (20) and the first contact device (25),
- wherein the first side (125) is electrically connected to the first contact device (25) and the second side (130) is electrically connected to the cable loom (20),
- wherein the first switching device (15) in the correction switching position electrically connects the cable loom (20) to the first contact device (25) and the first contact device (25) is assigned the first target assignment.

3. Connector system (10) according to Claim 1,
- wherein the cable loom (20) is electrically and mechanically connected to the first contact device (25),
- wherein the first contact device (25) is arranged between the first switching device (15) and the cable loom (20),
- wherein the first side (125) can be electrically connected to an electrical component (40) and the second side (130) is electrically connected to the first contact device (25),
- wherein each contact element (45, 50) of the first contact device (25) is electrically and mechanically connected to a respective electrical cable (60, 65) of the cable loom (20),
- wherein the contact elements (45, 50) of the first contact device (25) are arranged in a first contact housing (55) with a first actual assignment,
- wherein the correction switching position is determined depending on the first actual assignment and the first target assignment.

4. Connector system (10) according to any of the preceding claims,
- wherein the first switching device (15) has at least one first switching unit (120),
- wherein the first switching unit (120) can be switched at least between a first switching position and a second switching position,
- wherein the first switching unit (120) in the first switching position electrically connects a first connection (135) of the first side (125) to a third connection (145) of the second side (130),
- wherein the first switching unit (120) in the second switching position electrically connects the first connection (135) to a fourth connection (150) of the second side (130),
- wherein, depending on the correction switching position of the first switching device (15), the first switching unit (120) is switched to the first switching position or to the second switching position.

5. Connector system (10) according to Claim 4,
- wherein the first switching device (15) has at least one second switching unit (155),
- wherein the second switching unit (155) can be switched at least between a third switching position and a fourth switching position,
- wherein the second switching unit (155) in the third switching position electrically connects a second connection (140) of the first side (125) to the third connection (145) of the second side (130),
- wherein the second switching unit (155) in the fourth switching position electrically connects the second connection (140) to the fourth connection (150) of the second side (130),
- wherein the second switching unit (155) is switched to the third switching position or to the fourth switching position depending on the correction switching position.

6. Connector system (10) according to Claim 4 or 5,
- wherein the first switching unit (120) and/or the second switching unit (155) have/has an arrangement comprising at least two switching elements (160, 165, 170, 175) arranged in parallel,
- wherein the switching element (160, 165, 170, 175) has a MOSFET and/or a diode, in particular a blocking diode,
- and/or
- wherein the switching element (160, 165, 170, 175) is in the form of an electronic semiconductor component (160, 165, 170, 175),
- and/or wherein the first switching device (15) has at least one integrated circuit, in particular a field programmable gate array (FPGA).

7. Motor vehicle (500)
- comprising a connector system (10) according to any of the preceding claims and a vehicle controller (505),
- wherein the vehicle controller (505) is coupled to the first switching device (15) and is designed to control the first switching device (15).

8. Motor vehicle (500) according to Claim 7,
- wherein the vehicle controller (505) is connected to a sensor (460) of the connector system (10) and is designed to acquire information from the sensor (460) about an operating parameter of the connector system (10),
- wherein the vehicle controller (505) is designed to take into account the operating parameter when controlling the first switching device (15).

9. Method for producing a connector system (10) according to any of Claims 1 to 6,
- wherein an electrical cable (60, 65) of a cable loom (20) of a connector system (10) is laid,
- wherein the cable loom (20) is electrically connected to a first contact device (25) of the connector system (10),
- wherein a correction switching position of a first switching device (15) is ascertained depending on a first desired assignment of the first contact device (25),
- wherein the switching device (15, 405) is switched to the correction switching position;
- wherein an electrical resistance of at least one electrical cable (60, 65), preferably all electrical cables (60, 65), of the cable loom (20) is ascertained,
- wherein the electrical resistance is compared with a predefined resistance,
**characterized in that**,
- when the predefined resistance is exceeded by the ascertained resistance, the correction switching position is adjusted in such a way that the electrical cable (60, 65) for which the electrical resistance exceeds the predefined resistance is bypassed by a replacement cable (400).

10. Method according to Claim 9,
- wherein a brightness, in particular of a surrounding area, is measured,
- wherein the measured brightness is compared with a predefined brightness,
- wherein, when the predefined brightness is undershot by the ascertained brightness, the switching device (15) is switched to the correction switching position,
- wherein, when the predefined brightness is exceeded by the ascertained brightness, the switching device (15) is opened and current transmission by the switching device (15) is interrupted.

11. Method according to Claim 9 or 10,
- wherein a continuity test is carried out for each electrical cable (60, 65) of the cable loom (20),
- wherein a first actual assignment of the contact device (25, 30) is ascertained on the basis of a result of the continuity test for all electrical cables (60, 65),
- wherein the first actual assignment is taken into account when ascertaining the correction switching position.

12. Method according to any of Claims 9 to 11,
- wherein an electrical resistance of each electrical cable (60, 65) of the cable loom (20) is ascertained,
- wherein the electrical cable (60, 65) with the highest electrical resistance is determined,
- wherein the correction switching position is determined in such a way that a replacement cable (400) is connected in parallel with the electrical cable (60, 65) with the highest electrical resistance.

## Revendications

1. Système de connexion (10), en particulier système de faisceau de câbles,
- le système de connexion (10) comprenant un premier dispositif de commutation (15), un faisceau de câbles (20) ; un premier dispositif de contact (25), un deuxième dispositif de commutation (405) et un deuxième dispositif de contact (30),
- le faisceau de câbles (20) comprenant un ensemble d'une pluralité de câbles électriques (60, 65),
- un premier câble électrique (60) des câbles électriques (60, 65) étant endommagé ou interrompu,
- le premier dispositif de commutation (15) présentant un premier côté (125) et un deuxième côté (130),
- l'un des deux côtés (125, 130) étant connecté électriquement au premier dispositif de contact (25),
- le faisceau de câbles (20) étant connecté électriquement au premier dispositif de contact (25),
- le premier dispositif de commutation (15) étant commuté dans une position de commutation de correction en fonction d'une première affectation souhaitée du premier dispositif de contact (25) ;
- le deuxième dispositif de commutation (405) présentant un troisième côté (420) et un quatrième côté (425),
- le quatrième côté (425) étant connecté électriquement au deuxième dispositif de contact (30) et le troisième côté (420) étant connecté électriquement au faisceau de câbles (20),
- le deuxième dispositif de commutation (405) reliant électriquement le faisceau de câbles (20) au deuxième dispositif de contact (30) en fonction d'une deuxième affectation souhaitée du deuxième dispositif de contact (30) ;
**caractérisé en ce que**
- le faisceau de câbles (20) comporte un câble de remplacement (400),
- le câble de remplacement (400) reliant électriquement le premier dispositif de contact (25) au deuxième dispositif de commutation (405),
- les premier et deuxième dispositifs de commutation (15, 405) étant commutés dans la position de commutation de correction de telle sorte que le câble de remplacement (400) est connecté électriquement en dérivation par rapport au premier câble électrique (60).

2. Système de connexion (10) selon la revendication 1,
- dans lequel le premier dispositif de commutation (15) est agencé entre le faisceau de câbles (20) et le premier dispositif de contact (25),
- le premier côté (125) étant relié électriquement au premier dispositif de contact (25) et le deuxième côté (130) étant relié au faisceau de câbles (20),
- le premier dispositif de commutation (15) reliant électriquement le faisceau de câbles (20) au premier dispositif de contact (25) dans la position de commutation de correction et le premier dispositif de contact (25) étant occupé par la première affectation souhaitée.

3. Système de connexion (10) selon la revendication 1,
- dans lequel le faisceau de câbles (20) est relié électriquement et mécaniquement au premier dispositif de contact (25),
- le premier dispositif de contact (25) étant agencé entre le premier dispositif de commutation (15) et le faisceau de câbles (20),
- le premier côté (125) étant apte à être relié électriquement à un composant électrique (40) et le deuxième côté (130) étant relié électriquement au premier dispositif de contact (25),
- un élément de contact (45, 50) du premier dispositif de contact (25) étant respectivement relié électriquement et mécaniquement à un câble électrique (60, 65) du faisceau de câbles (20),
- les éléments de contact (45, 50) du premier dispositif de contact (25) étant agencés avec une première affectation réelle dans un premier boîtier de contact (55),
- la position de commutation de correction étant déterminée en fonction de la première affectation réelle et de la première affectation souhaitée.

4. Système de connexion (10) selon l'une des revendications précédentes,
- dans lequel le premier dispositif de commutation (15) comporte au moins une première unité de commutation (120),
- la première unité de commutation (120) étant apte à être commutée au moins entre une première position de commutation et une deuxième position de commutation,
- la première unité de commutation (120) reliant électriquement, dans la première position de commutation, une première borne (135) du premier côté (125) à une troisième borne (145) du deuxième côté (130),
- la première unité de commutation (120) reliant électriquement, dans la deuxième position de commutation, la première borne (135) à une quatrième borne (150) du deuxième côté (130),
- la première unité de commutation (120) étant commutée dans la première position de commutation ou dans la deuxième position de commutation en fonction de la position de commutation de correction du premier dispositif de commutation (15).

5. Système de connexion (10) selon la revendication 4,
- dans lequel le premier dispositif de commutation (15) comporte au moins une deuxième unité de commutation (155),
- la deuxième unité de commutation (155) étant apte à être commutée au moins entre une troisième position de commutation et une quatrième position de commutation,
- la deuxième unité de commutation (155) reliant électriquement, dans la troisième position de commutation, une deuxième borne (140) du premier côté (125) à la troisième borne (145) du deuxième côté (130),
- la deuxième unité de commutation (155) reliant électriquement, dans la quatrième position de commutation, la deuxième borne (140) à la quatrième borne (150) du deuxième côté (130),
- la deuxième unité de commutation (155) étant commutée dans la troisième position de commutation ou dans la quatrième position de commutation en fonction de la position de commutation de correction.

6. Système de connexion (10) selon la revendication 4 ou la revendication 5,
- dans lequel la première unité de commutation (120) et/ou la deuxième unité de commutation (155) présente un agencement d'au moins deux éléments de commutation (160, 165, 170, 175) agencés en parallèle,
- l'élément de commutation (160, 165, 170, 175) comprenant un MOSFET et/ou une diode, en particulier une diode de blocage,
et/ou
- l'élément de commutation (160, 165, 170, 175) étant conçu sous la forme d'un composant électronique à semiconducteur (160, 165, 170, 175),
- et/ou dans lequel le premier dispositif de commutation (15) présente au moins un circuit intégré, en particulier un réseau de portes programmables par l'utilisateur (Field Programmable Gate Array, FPGA).

7. Véhicule automobile (500)
- présentant un système de connexion (10) selon l'une des revendications précédentes et un appareil de commande de véhicule (505),
- l'appareil de commande de véhicule (505) étant relié au premier dispositif de commutation (15) et étant configuré pour commander le premier dispositif de commutation (15).

8. Véhicule automobile (500) selon la revendication 7,
- dans lequel l'appareil de commande de véhicule (505) est relié à un capteur (460) du système de connexion (10) et est configuré pour détecter une information provenant du capteur (460), concernant un paramètre de fonctionnement du système de connexion (10),
- l'appareil de commande du véhicule (505) étant conçu pour prendre en compte le paramètre de fonctionnement lors de la commande du premier dispositif de commutation (15).

9. Procédé de fabrication d'un système de connexion (10) selon l'une des revendications 1 à 6,
- dans lequel il est réalisé la pose d'un câble électrique (60, 65) d'un faisceau de câbles (20) d'un système de connexion (10),
- le faisceau de câbles (20) étant connecté électriquement à un premier dispositif de contact (25) du système de connexion (10),
- une position de commutation de correction d'un premier dispositif de commutation (15) étant déterminée en fonction d'une première affectation souhaitée du premier dispositif de contact (25),
- le dispositif de commutation (15, 405) étant commuté dans la position de commutation de correction ;
- une résistance électrique d'au moins un câble électrique (60, 65), de préférence de tous les câbles électriques (60, 65) du faisceau de câbles (20), étant déterminée,
- la résistance électrique étant comparée à une résistance prédéfinie,
**caractérisé en ce que**
- en cas de dépassement de la résistance prédéfinie par la résistance déterminée, la position de commutation de correction est adaptée de telle sorte que le câble électrique (60, 65) dont la résistance électrique dépasse la résistance prédéfinie soit ponté par un câble de remplacement (400).

10. Procédé selon la revendication 9,
- dans lequel on mesure une luminosité, notamment d'un environnement,
- la luminosité mesurée étant comparée à une luminosité prédéfinie,
- si la luminosité déterminée tombe en dessous de la luminosité prédéfinie, le dispositif de commutation (15) est commuté dans la position de commutation de correction,
- dans lequel, en cas de dépassement de la luminosité prédéfinie par la luminosité déterminée, le dispositif de commutation (15) est ouvert et une transmission de courant par le dispositif de commutation (15) est interrompue.

11. Procédé selon la revendication 9 ou la revendication 10,
- dans lequel un contrôle de continuité est effectué pour chaque câble électrique (60, 65) du faisceau de câbles (20),
- une première affectation réelle du dispositif de contact (25, 30) étant déterminée sur la base d'un résultat du contrôle de continuité pour tous les câbles électriques (60, 65),
- la première affectation réelle étant prise en compte lors de la détermination de la position de commutation de correction.

12. Procédé selon l'une des revendications 9 à 11,
- dans lequel une résistance électrique de chaque câble électrique (60, 65) du faisceau de câbles (20) est déterminée,
- le câble électrique (60, 65) présentant la plus grande résistance électrique est déterminé,
- la position de commutation de correction étant déterminée de telle sorte qu'un câble de remplacement (400) soit connecté en parallèle au câble électrique (60, 65) présentant la plus grande résistance électrique.
